# FASCICULE DE BREVET EUROPEEN

(11) **EP 4 561 343 B1**
(45) Date de publication et mention de la délivrance du brevet: **08.04.2026**
(21) Numéro de dépôt: 23751108.4
(22) Date de dépôt: 21.07.2023
(51) Int. Cl.: A01K 1/015, B65G 19/14, B65G 53/44, B65G 65/42

(54) **UNITÉ DE TRANSFERT ET DE DISTRIBUTION DE MATIÈRES VÉGÉTALES ET INSTALLATION LA COMPORTANT**
TRANSFER- UND AUSGABEEINHEIT FÜR PFLANZLISCHES MATERIAL UND ANLAGE DAMIT
UNIT FOR TRANSFERRING AND DISPENSING VEGETABLE MATERIAL AND FACILITY COMPRISING SAME

(30) Priorité: 31.07.2022 FR 2207948
(43) Date de publication de la demande: 04.06.2025
(73) Titulaire: Dussau Développement, 40320 Pécorade (FR)
(72) Inventeur: BERNADET, Marie-Dominique, 40 500 Toulouse (FR); DESTRIBOS, Frédéric, 40320 Toulouse (FR); DUSSAU, Christian, 40320 Toulouse (FR); FAYON, Christophe, 40270 Cazeres Sur L'Adour (FR); MICAS, Henri, 40800 Duhort Bachen (FR); MOREAU LUCAS, Maxime, 40990 Angoume (FR); PILOTTE, Michael, 40320 Toulouse (FR); RENAULT, Marceau, 40000 Mont De Marsan (FR); SUSSERRE, Jérôme, 32400 Toulouse (FR); ZERIOUH, Tarik, 32110 Nogaro (FR); MALARDIER, Annaïck, 40000 Toulouse (FR)
(74) Mandataire: Bringer IP
(86) Numéro de dépôt international: PCT/IB2023/057459
(87) Numéro de publication internationale: WO 2024/028691

(56) Documents cités:
- EP-A2- 2 121 490
- WO-A1-02/064466

## Description

La présente invention est relative à une unité de transfert et de distribution par voie pneumatique de matière végétale. Elle est également relative à une installation comportant une telle unité ainsi qu'une source d'approvisionnement en matière végétale, cette source pouvant être constituée par une unité de désagrégation de blocs compacts de matières végétales.

La matière végétale peut être de différente nature et se présenter sous des formes variées. Elle peut être une matière fibreuse divisée en brins, telle que de la paille par exemple de céréales, de lin, de chanvre, ou bien du foin, de la fougère, du miscanthus, de la gabasse et autres, ou peut encore consister en des grains de céréales et d'autres plantes. Elle peut être fragmentée, par exemple sous forme de copeaux de bois. Elle peut se présenter sous forme sèche ou humide, fraiche ou fermentée. Elle est fournie en général en blocs compacts compressés sous forme de balles parallélépipédiques ou cylindriques qui doivent être décompactés et désagrégés, voire démêlés, en vue de leur distribution.

On sait que les litières pour animaux d'élevage sont constituées de matières végétales épandues sur le sol de l'aire d'élevage en couches plus ou moins épaisses, typiquement des matières fibreuses telles que de la paille, des copeaux de bois et autres matières.

Pour former une litière, il est connu de désagréger des balles de paille compressées et d'épandre la paille arrachée à la balle sur le sol. Habituellement, les balles de paille sont désagrégées à l'extérieur du bâtiment d'élevage et le produit désagrégé est transporté par voie pneumatique dans ce dernier pour y être épandu.

Un transport pneumatique de matières fibreuses pour litière est divulgué dans le brevet EP 2121490 de la demanderesse. Le transporteur selon ce brevet est formé d'une trémie de grande capacité et d'une unité de transfert comprenant une zone amont de chargement en matière végétale, en relation de communication avec la trémie de grande capacité, une zone aval de délivrance de matière végétale prévue pour être en relation de communication avec un moyen de transport de cette matière végétale vers un lieu de distribution, et un convoyeur à cellules, mobile entre la zone amont de chargement et la zone aval de délivrance. La matière végétale est transportée par chaque cellule entre les deux zones de chargement et de délivrance et est expulsée de la zone de délivrance par un courant d'air porteur la traversant de part en part, pour entraîner la matière végétale déversée dans la zone aval de délivrance vers un conduit de transport et de délivrance. Le convoyeur à cellules est formé d'une chaîne sans fin tendue entre une roue dentée menante et une roue dentée menée, et de disques circulaires montés sur la chaîne à égale distance les uns des autres, définissant les cellules de transport.

Il est apparu que le degré de remplissage des cellules n'est pas optimal avec certaines matières fibreuses comme les pailles longues. De plus, des difficultés d'extraction de la zone de délivrance de ces matières fibreuses ont été observées, conduisant à la formation de bouchons et à l'arrêt de la distribution. En outre, sont apparus des problèmes liés à la présence de poussières dans la matière végétale
Les unités de transfert connues ainsi que les machines de désagrégation des blocs compacts de matière végétale ne sont en général pas équipées de moyens pour extraire les corps durs qu'elle peut contenir. Habituellement, ces corps durs, constitués par des pierres, des débris métalliques ou autres objets de diverses grosseurs, présentent un poids volumique plus élevé que celui des matières végétales, et peuvent provoquer la détérioration des organes des machines ou bien infliger des blessures aux animaux, potentiellement létales si ces corps durs sont projetés durant les opérations d'épandage.

Certaines machines utilisées pour désagréger les balles de paille sont formées d'une cuve tournante recevant une balle de paille et d'un rotor déchiqueteur apte à la désagréger par action de coupe. Le produit de litière est alors formé par des brins de paille relativement courts. Ces machines sont dotées de plus d'un moyen de distribution du produit de litière à distance par voie pneumatique, typiquement à l'aide d'une soufflante générant un courant d'air porteur dans lequel est introduit le produit de litière et d'un tuyau souple de distribution connecté à une bouche de délivrance que comporte la soufflante. L'extrémité aval du tuyau est habituellement dotée de poignées de préhension pour sa manipulation par le personnel affecté à l'épandage de la litière.

On connaît également du document EP 2 478 758, une machine distributrice apte à déchiqueter et distribuer des produits de litière. Cette machine comprend une caisse fixe dont le fond est doté d'un tapis sans fin prévu pour recevoir une balle de paille, un déchiqueteur à rouleau disposé à l'avant de la caisse et contre lequel la balle est appliquée par le mouvement du tapis sans fin, et une soufflante pour propulser la paille déchiquetée vers un conduit de sortie.

Une des particularités des machines antérieures réside dans le fait que la désagrégation des balles de paille est opérée par hachage, de sorte que le produit final de litière est constitué de brins courts. Un tel produit, préféré pour le paillage des aires d'élevage des poulets, présente l'avantage d'un transport aisé par voie pneumatique. Cependant, son utilisation pose problème pour le paillage des aires d'élevage des animaux de poids moyen et/ou important, comme les bovins, les porcins, les ovins et les caprins. En effet, les litières réalisées à l'aide de pailles courtes sont aisément transpercées par les onglons des animaux et se trouvent rapidement souillées par l'humidité sous-jacente ou par l'urine. Les litières à pailles longues ne présentent pas un tel inconvénient et forment un coussin apte à résister au poids des animaux sans être perforé. Cependant, la distribution des pailles longues par les transporteurs pneumatiques de l'art antérieur est fastidieuse en raison des problèmes de bourrage et de la mauvaise évacuation de la paille.

Pour mener à bien l'opération de hachage ou de broyage d'une balle de paille en brins courts, les couteaux utilisés dans ces machines, en raison de leur action de coupe dans une masse compacte, sont entraînés selon des vitesses angulaires importantes. Habituellement, ces machines présentent en aval des couteaux, des pales de propulsion de la paille entraînées également à grande vitesse. Ces particularités constituent un inconvénient sérieux, car lorsque les déchiqueteurs, couteaux ou pales frappent à grande vitesse un corps dur se trouvant dans une balle de paille, des particules incandescentes peuvent se former et enflammer la paille ainsi que la machine.

Un autre effet indésirable d'une vitesse élevée est le risque d'entraînement, tant dans le circuit de hachage que de propulsion, d'amas plus ou moins importants de matière végétale. Or, ces amas peuvent provoquer un blocage des organes mécaniques actifs de ces circuits. De ce fait, les machines sont souvent surdimensionnées en termes de puissance mécanique, afin d'absorber les pics de consommation énergétique qui apparaissent lorsque des amas sont entraînés au travers des éléments de coupe. Toutefois, un surdimensionnement des éléments actifs des machines augmente significativement leur coût, alors que les pics de surconsommation n'apparaissent que très ponctuellement et pour une courte durée d'un cycle de fonctionnement.

Un autre effet indésirable est une augmentation notable des pertes de charge dans le circuit de distribution par courant d'air porteur. En effet, ces amas se trouvant en frottement constant dans les conduites du circuit, leur transport requiert des pressions d'air relativement élevées. En outre, la distribution de la paille est inévitablement saccadée, le débit instantané de paille en sortie de la conduite de distribution étant alors irrégulier, ce qui se traduit par la formation d'une litière irrégulière ou par un remplissage irrégulier des auges et aires de nourrissage. De surcroît, des bouchons peuvent se former dans les conduites, s'opposant à toute distribution ultérieure. Leur débouchage est une opération fastidieuse, en particulier quand les conduites sont installées en hauteur, ce qui nécessite l'emploi de nacelles conformément aux règles de sécurité.

Les opérations de traitement mécanique de la paille, telles que le hachage, le broyage, ou le défibrage (réduction de la longueur des brins), s'accompagnent de la formation de poussières qui sont entraînées vers le lieu d'épandage de la litière par les amas de paille. Les locaux d'élevage se sont envahis par de la poussière en suspension, susceptible de provoquer des maladies animales et humaines. On évite donc le paillage en présence des animaux et le travail du personnel sans masque et vêtement de protection. Mais un paillage hors de la présence des animaux peut être impossible en cas de confinement total ou partiel du cheptel.

### Exposé de l'invention

Le but principal de la présente invention est de proposer une unité de transfert et de distribution de matière végétale divisée ou désagrégée, munie d'un convoyeur à cellules du genre précité, à capacité accrue de chargement des cellules. Un autre but de la présente invention est de proposer une unité de transfert apte à débarrasser la matière végétale de la plus grande partie des poussières qu'elle transporte. Un autre but de la présente invention est d'améliorer l'extraction de la matière végétale déversée dans la zone de délivrance. Un autre but de la présente invention est de proposer une unité de transfert apte à séparer de la matière végétale les corps durs qu'elle pourrait contenir.

La solution élaborée en réponse à ces objectifs concerne une unité de transfert et de distribution de matière végétale, comportant :
- une zone amont de chargement de matière végétale, prévue pour être alimentée par une source de matière végétale, ladite zone amont comportant une ouverture de chargement et, à l'opposé de cette ouverture, un fond en forme de goulotte,
- une zone aval de délivrance de matière végétale prévue pour être en relation de communication avec un moyen de transport de cette matière végétale vers un lieu de distribution,
- un convoyeur mobile, traversant de part en part lesdites zones amont et aval, comportant des cellules aptes à transporter la matière végétale entre ladite zone amont et ladite zone aval et,
- un générateur d'écoulement gazeux en relation de communication par une conduite de transport de fluide gazeux avec la zone aval de délivrance, apte à former dans ladite zone aval, un courant gazeux porteur sous pression apte à chasser de cette zone aval la matière végétale qui s'y trouve et qui y est délivrée par le convoyeur et à l'introduire dans le moyen de transport.

Cette unité se caractérise essentiellement en ce qu'elle comporte un moyen d'aspiration en relation de communication avec au moins la zone amont de chargement et avec les cellules du convoyeur présentes dans ladite zone amont, ledit moyen d'aspiration étant apte à créer une dépression dans lesdites cellules pour faciliter leur complet remplissage et pour aspirer les poussières que pourrait transporter la matière végétale. Cette disposition réduit de manière significative la quantité de poussières présente dans la matière végétale avant distribution. De surcroît, elle augmente notablement le degré de remplissage des cellules du convoyeur.

La matière végétale introduite dans le moyen de transport peut être convoyée et distribuée ou épandue, par exemple dans une aire d'élevage. Elle peut être déversée sur une aire de nourrissage ou dans des auges, ou épandue à distance.

Selon une autre caractéristique de l'invention, le moyen d'aspiration de l'unité de transfert et de distribution comprend une chambre d'aspiration en relation de communication avec la zone amont de chargement et un ensemble d'aspiration et de refoulement d'air intégrant un collecteur de poussières, ledit ensemble comportant une bouche d'aspiration connectée à ladite chambre d'aspiration, et une bouche de refoulement d'air épuré formée par la bouche de refoulement d'air dudit collecteur de poussières.

Selon une autre caractéristique de l'invention, l'une des parois latérales ou le fond de la zone amont de chargement est perforée et constitue l'une des parois de la chambre d'aspiration. De préférence, la paroi perforée est constituée par le fond de la zone amont de chargement.

Selon une autre caractéristique de l'invention, le générateur d'écoulement gazeux est formé par l'ensemble d'aspiration et de refoulement, la bouche de refoulement d'air épuré dudit ensemble étant en relation de communication avec la zone aval de délivrance que comporte l'unité de transfert et de distribution. Une telle disposition permet une réduction notable du coût de l'installation puisque deux fonctions distinctes sont assurées par des mêmes composants mécaniques. En variante, le moyen d'aspiration et le générateur d'écoulement gazeux sont distincts. Dans ce cas de figure, le générateur d'écoulement gazeux sera doté d'un épurateur de poussières pour délivrer un écoulement gazeux épuré.

Selon une autre caractéristique de l'invention, la zone amont de chargement, au-dessus du convoyeur, parallèlement au fond, comporte une vis égalisatrice d'Archimède, propre à répartir la matière végétale dans les différentes cellules lors de leur passage dans ladite zone amont. De préférence, la vis égalisatrice est dotée d'éléments de dislocation radiaux, rigides, des éventuels amas de matière végétale.

Selon une autre caractéristique de l'invention, la zone aval de délivrance comporte une buse rotative et le courant gazeux délivré par le générateur d'écoulement gazeux est introduit dans ladite zone aval de délivrance par l'intermédiaire de ladite buse rotative, cette dernière étant apte à augmenter la vitesse de ce courant gazeux.

Selon une autre caractéristique de l'invention, la zone aval de délivrance de l'unité de transfert et de distribution comporte un extracteur mécanique de matière végétale, apte à balayer ladite zone et les cellules du convoyeur qui s'y trouvent pour parfaire l'extraction de la matière végétale non chassée par le courant gazeux sous pression. Un tel extracteur facilite la distribution de la matière végétale au moyen de transport et égalise cette distribution. Par ailleurs, il contribue à disloquer les amas de paille qui pourraient se présenter en zone de délivrance et à aérer la matière végétale par brassage, facilitant ainsi son déplacement dans le moyen de transport. Enfin, il a pour but d'extraire les brins longs à cheval sur plusieurs cellules du convoyeur.

Selon une autre caractéristique de l'invention, l'unité de transfert et de distribution est pourvue, en amont de sa zone amont de chargement, d'un séparateur apte à générer une lame d'air sous pression de direction ascendante, transversale au flux de matière végétale délivré par la source, à soutenir au-dessus d'un réceptacle de récupération le flux de matière végétale et à permettre, avant introduction dans cette zone amont, la chute des corps pesants vers le réceptacle.

Selon une autre caractéristique de l'invention, l'unité de transfert et de distribution est dotée d'au moins une vanne pilotée installée sur la conduite de transport de fluide gazeux et sur le moyen de transport de matière végétale. De plus, le moyen de transport est formé par une conduite, et ladite vanne, à la commande, est apte à isoler du générateur de courant gazeux et du moyen de transport, la zone aval de délivrance et à établir une communication directe entre ladite conduite et le moyen de transport, le générateur de courant gazeux fonctionnant alors en aspiration pour créer une dépression dans la conduite et dans le moyen de transport afin de disloquer les bouchons de matière végétale présents dans ledit moyen de transport. Cette disposition permet de manière simple et efficace la dislocation des bouchons et évite généralement une intervention manuelle sur la conduite constitutive du moyen de transport, qui est parfois difficile à exécuter en raison de sa position en hauteur ou sous terre.

La présente invention a également pour objet une installation de fourniture et de distribution à distance de matière végétale sous une forme décompactée et démêlée, en brins courts ou longs. Une telle installation se caractérise essentiellement en ce qu'elle comporte une unité de transfert et de distribution selon l'invention et une source de matière végétale en relation de communication avec l'ouverture de chargement de la zone amont de chargement de l'unité de transfert et de distribution, ladite source comprenant un poste de désagrégation d'un bloc compact de matière végétale.

Selon une autre caractéristique de l'invention, la source de matière végétale est constituée par au moins un poste de désagrégation d'un bloc compact de matière végétale par action de grattage, apte à délivrer par une zone de délivrance une matière végétale totalement ou partiellement démêlée et décompactée, ledit poste de désagrégation comportant :
- une enceinte prévue pour recevoir un bloc de matière végétale, et
- un moyen de grattage évoluant sur une sole de glissement horizontale formant, en combinaison avec ledit moyen de grattage, le fond de l'enceinte sur lequel le bloc de matière végétale est destiné à reposer, pour être soumis à une action de déstructuration et d'arasement, ladite enceinte étant prévue pour recevoir un bloc compact de matière végétale à déstructurer par grattage, destiné à reposer sur la sole et sur le moyen de grattage pour être soumis à l'action de déstructuration et d'arasement de ce dernier, et

- ladite enceinte comportant une paroi avant contre laquelle vient buter le bloc de matière végétale sous l'effet de l'action du moyen de grattage ;
- le moyen de grattage étant doté d'éléments de grattage mobiles entraînés vers la zone de délivrance par au moins un premier organe moteur, et prévus pour être au contact, sur au moins une portion de leur trajet, avec le bloc de matière végétale à désagréger, pour arracher à ce dernier de la matière végétale et la transporter vers la zone de délivrance, laquelle est en relation de communication avec l'ouverture de chargement que comporte la zone amont de chargement de l'unité de transfert et de distribution.

Les éléments de grattage que comporte le poste de désagrégation agissent sur le bloc compact pour en détacher de la matière végétale sans action de coupe notable sur cette dernière. Ainsi, est délivrée à l'unité de transfert et de distribution, une matière formée de fibres décompactées, démêlées et non coupées. Celle disposition permet d'utiliser les fibres telles qu'elles sont délivrées à l'unité de transfert et de délivrance ou bien de les couper à la longueur requise selon les besoins de l'élevage.

L'efficacité de l'opération de grattage ne dépend pas de la vitesse du moyen de grattage contre le bloc compact. Pour cette raison, il n'est nul besoin d'entraîner le moyen de grattage selon une vitesse élevée. Est ainsi écarté le risque de formation de particules incandescentes par frottement des éléments actifs de grattage contre des corps durs tels que pierres et autres pouvant se trouver dans le bloc compact. Le risque d'incendie de la matière végétale et du poste de désagrégation est ainsi écarté.

La faible vitesse des éléments de grattage limite la puissance mécanique nécessaire au bon fonctionnement du moyen de grattage. De plus, pour éviter tout surdimensionnement du moyen de grattage et de son premier organe moteur en termes de puissance mécanique, ce moyen de grattage peut être équipé d'un organe moteur additionnel et d'un moyen de mesure de la puissance consommée par le premier organe moteur, apte à activer ledit organe moteur additionnel d'entraînement lorsque la valeur de la puissance consommée par le premier organe moteur atteint une valeur de consigne. Cette situation peut se produire lors de l'opération de grattage, lorsque des éléments de grattage butent contre un amas particulièrement compact.

Si l'ajout ponctuel de puissance mécanique par activation de l'organe moteur additionnel s'avère insuffisant, la puissance consommée par le premier organe moteur demeurant supérieure à la valeur de consigne, le moyen de mesure est apte à déclencher, pendant une période fixée à l'avance, le mouvement inverse des éléments de grattage, l'organe moteur additionnel pouvant être toujours activé lors de ce mouvement inverse, et à le répéter un nombre prédéterminé de fois si la puissance consommée est toujours supérieure à la valeur de consigne. Habituellement, le mouvement inverse permet de dégager de l'amas compact les éléments de grattage bloqués par ce dernier. Il y a lieu de noter que lors du mouvement inverse, les éléments de grattage aval viendront agir sur l'amas afin de le disloquer. À la fin de cette séquence, les éléments de grattage seront à nouveau entraînés selon leur sens normal de marche. Ce va-et-vient constitue un cycle opératoire de dislocation, qui pourra être répété si besoin autant de fois que nécessaire toujours en activant l'organe moteur additionnel.

Pour ce faire, le poste de désagrégation comporte un moyen de commande apte à arrêter le moyen de grattage et à générer un signal d'alerte lorsque, après un nombre prédéterminé de cycles opératoires de dislocation, la puissance consommée est toujours supérieure à la valeur de consigne. Le signal d'alerte pourra être suivi d'une intervention manuelle, dans le but d'éliminer le défaut.

Selon une autre caractéristique de l'invention, le moyen de grattage est formé d'au moins deux chaînes sans fin, motorisées, et par des éléments de grattage, équidistants, fixés aux chaînes sans fin, lesdits éléments de grattage étant transversaux aux chaînes sans fin et portant chacun au moins une dent de grattage prévue pour pénétrer dans le bloc compact de matière végétale pour en détacher des fragments ou des brins.

Selon une autre caractéristique de l'invention, la paroi avant de l'enceinte que comporte le poste de désagrégation est disposée par son bord inférieur, au-dessus du moyen de grattage à écartement de ce dernier et ménage de ménager un intervalle de régulation formant un calibre pour s'opposer au passage de fragments de tailles importantes vers la zone de délivrance.

Selon une autre mode de réalisation de l'invention, la source de matière végétale est constituée par au moins un poste de désagrégation d'un bloc compact de matière végétale par action de grattage, apte à délivrer par une zone de délivrance une matière végétale totalement ou partiellement démêlée et décompactée, ledit poste de désagrégation comportant :
- une enceinte prévue pour recevoir le bloc de matière végétale, ladite enceinte comportant un fond formé d'un tapis sans fin à lattes, motorisé,
- un moyen de grattage formé par des rouleaux déchiqueteurs supérieur et inférieur, motorisés, horizontaux, parallèles, montés l'un au-dessus de l'autre, en rotation dans des paliers solidaires du châssis du poste de désagrégation, le rouleau déchiqueteur supérieur étant de plus grand diamètre que le rouleau déchiqueteur inférieur,
- un moyen de transfert vers l'unité de transfert et de distribution de la matière végétale défibrée ou fragmentée.

Selon une autre caractéristique, le rouleau déchiqueteur supérieur du moyen de grattage est de plus grand diamètre que le rouleau déchiqueteur inférieur.

### Bref exposé des figures

D'autres avantages, buts et caractéristiques de la présente invention apparaîtront à la lecture de la description de formes préférées de réalisation, données à titre d'exemples non limitatifs se référant aux dessins annexés.
[Fig.1a] est une vue avant en perspective de l'unité de transfert et de distribution selon l'invention.
[Fig.1b] est une vue arrière en perspective de ladite unité.
[Fig.2a] est une vue en coupe partielle de ladite unité.
[Fig.2b] est une vue en coupe longitudinale de ladite unité.
[Fig.3] est une vue en perspective de la chaîne à palettes du convoyeur de l'unité.
[Fig.4] est une vue de détail de la chaîne du convoyeur à cellule.
[Fig.5] est une vue partielle d'une première forme d'extracteur mobile.
[Fig.5a] est une vue partielle d'une seconde forme d'extracteur mobile.
[Fig.6a] est une vue en perspective d'un module de démêlage.
[Fig.6b] est une vue de face d'un élément radial du module de démêlage.
[Fig.7] est une vue partielle de l'unité de transfert et de distribution montrant la buse d'introduction du courant d'air sous pression dans la zone aval de délivrance.
[Fig.8], [Fig.9] et [Fig.10] sont des vues partielles de l'unité de transfert et de distribution montrant respectivement, une première, une deuxième et une troisième formes de réalisation d'un extracteur mécanique associé à la zone de délivrance.
[Fig.11] est une vue partielle de l'unité montrant un extracteur mécanique comportant des éléments de hachage ou de broyage.
[Fig.12] est une vue en éclaté d'un broyeur équipant la zone aval de délivrance.
[Fig.13] est une vue en perspective d'une vanne d'aiguillage associée au moyen de transport.
[Fig.14] et [Fig.15] sont des vues schématiques montrant un jeu de deux vannes d'isolement, en position d'alimentation en fluide gazeux ([Fig.14]), et en position d'isolement de la zone aval de délivrance ([Fig.15]).
[Fig.16] et [Fig.17] sont des vues schématiques d'une vanne d'isolement en position d'alimentation en fluide gazeux ([Fig.16]) et en position d'isolement ([Fig.17]) de la zone aval de délivrance de la zone aval de délivrance et du moyen de transport associé.
[Fig.18] est une vue en perspective d'un séparateur.
[Fig.19] est une vue en coupe transversale du séparateur selon la [Fig.18].
[Fig.20] est une vue schématique d'une hotte avec le séparateur selon la [Fig.18].
[Fig.21] est une vue en perspective de trois quarts avant d'une installation selon une première forme de réalisation de l'invention.
[Fig.22] montre en perspective de trois quarts arrière l'installation de la [Fig.21].
[Fig.23] est une vue en coupe transversale du poste de désagrégation constitutif de la source de matière végétale.
[Fig.24] est une vue selon une échelle agrandie du détail A de la [Fig.23].
[Fig.25] est une vue en coupe longitudinale du même poste de désagrégation.
[Fig.26] est une vue de détail du moyen de grattage.
[Fig.27] est une vue en perspective d'une installation selon une forme préférée de réalisation.

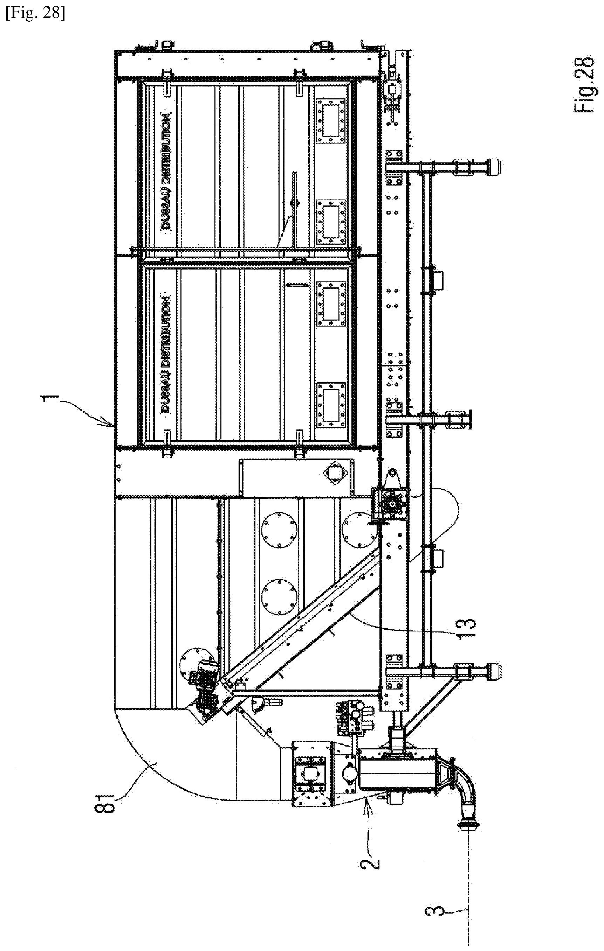

[Fig.28] est une vue de profil de l'installation selon la [Fig.27].
[Fig.29] est une vue arrière du poste de désagrégation de l'installation selon la [Fig.27], les battants de porte formant la paroi arrière de l'enceinte que comporte le poste de désagrégation étant supposés ôtés.
[Fig.30] est une vue schématique de l'installation selon la [Fig.27].

### Description de modes préférés de réalisation de l'invention

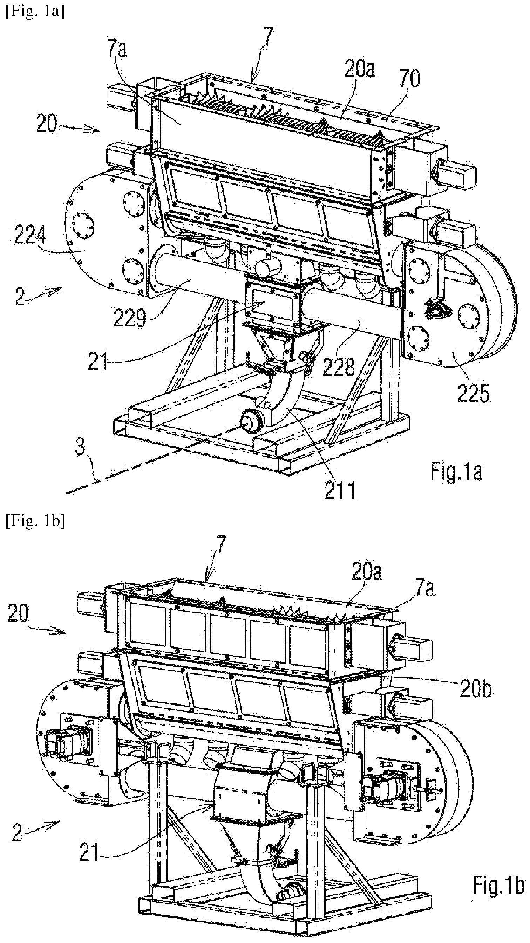

En figures [Fig.1a] et [Fig.1b] est représentée une unité 2 de transfert et de distribution de matière végétale, prévue pour être alimentée, de préférence par gravité, par au moins une source 1 de matière végétale divisée ou en grains et dispenser cette matière végétale à un moyen de transport 3, telle une conduite ou un réseau de conduites, apte à délivrer cette matière végétale à une aire d'élevage, une réserve, ou autre, située par exemple à distance de l'unité 2 de transfert et de distribution. Le moyen de transport 3 est représenté par un trait mixte fort en figures [Fig.1a] et [Fig.1b]. La source 1 de matière végétale peut être constituée par un poste de désagrégation d'un bloc compact de matière végétale, décrit plus loin, par un tapis d'alimentation en produit végétal fragmenté ou en grains délivré par une réserve ou un silo ou par tout autre moyen apte à contenir et délivrer un produit végétal.

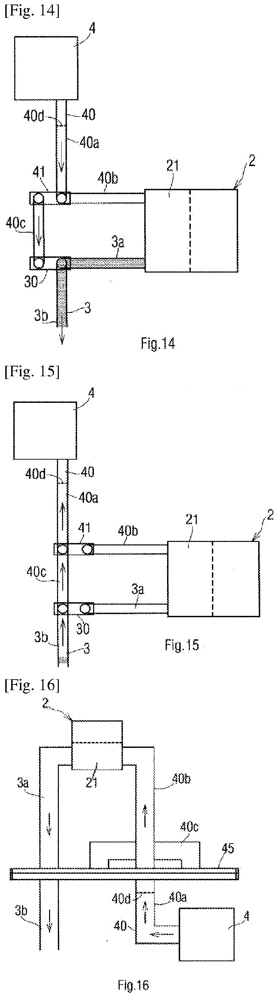

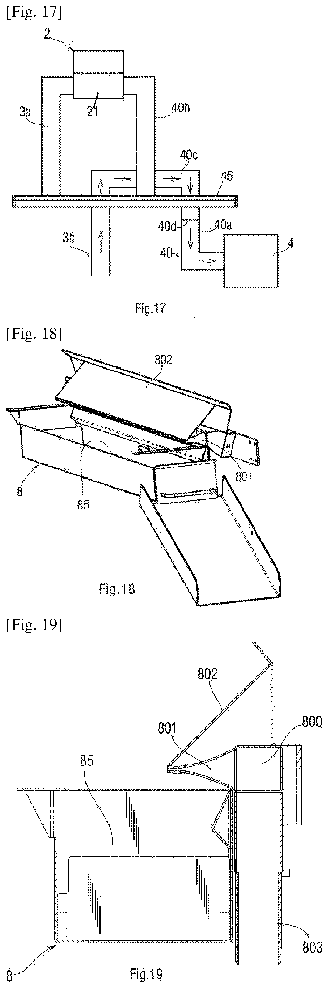

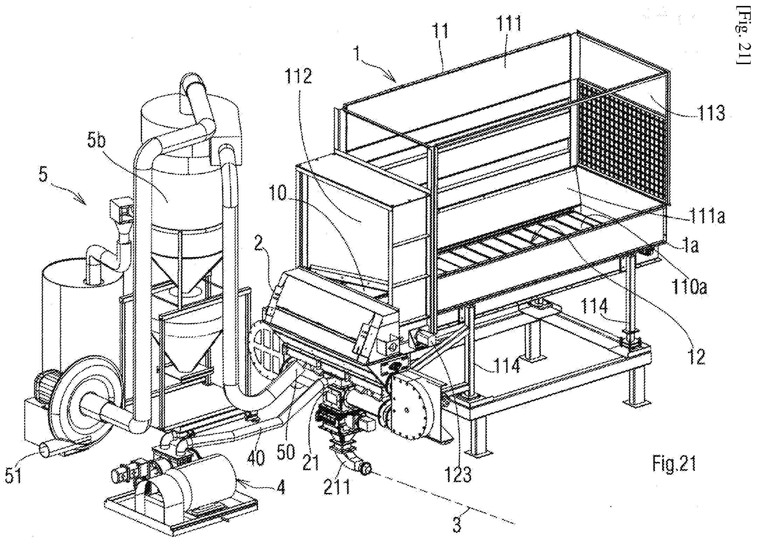

L'unité 2 de transfert et de distribution de la matière végétale est montée sur un châssis et comporte :
- une zone amont 20 de chargement de matière végétale, prévue pour être en relation de communication avec la source 1 de matière végétale,
- une zone aval 21 de délivrance de matière végétale prévue pour être en relation de communication avec un moyen de transport 3 de cette matière végétale et
- un convoyeur 22 à cellules 22a, mobile entre la zone amont 20 de chargement et la zone aval 21 de délivrance, la matière végétale étant transportée par chaque cellule 22a entre la zone amont 20 et la zone aval 21. De plus, l'unité 2 de transfert et de distribution est associée à un générateur 4 (Figures [Fig.14] à [Fig.17] et [Fig.21]) apte à produire un écoulement gazeux, qui peut être épuré et donc débarrassé de toutes poussières. L'écoulement gazeux peut être formé par un écoulement d'air. Le générateur 4 d'écoulement gazeux est en relation de communication avec la zone aval 21 de délivrance et forme dans celle-ci un courant gazeux porteur, sous pression, apte à chasser de cette zone aval 21, la matière végétale qui s'y trouve et qui y est délivrée par le convoyeur 2, et à l'introduire et la véhiculer dans le moyen de transport 3 pour une distribution ou un épandage à distance, dans une aire d'élevage par exemple ou dans une réserve.

La zone amont 20 comporte une ouverture de chargement 20a par laquelle la matière végétale est introduite dans son volume interne. À l'opposé de cette ouverture de chargement 20a, la zone amont 20 est dotée d'un fond 200.

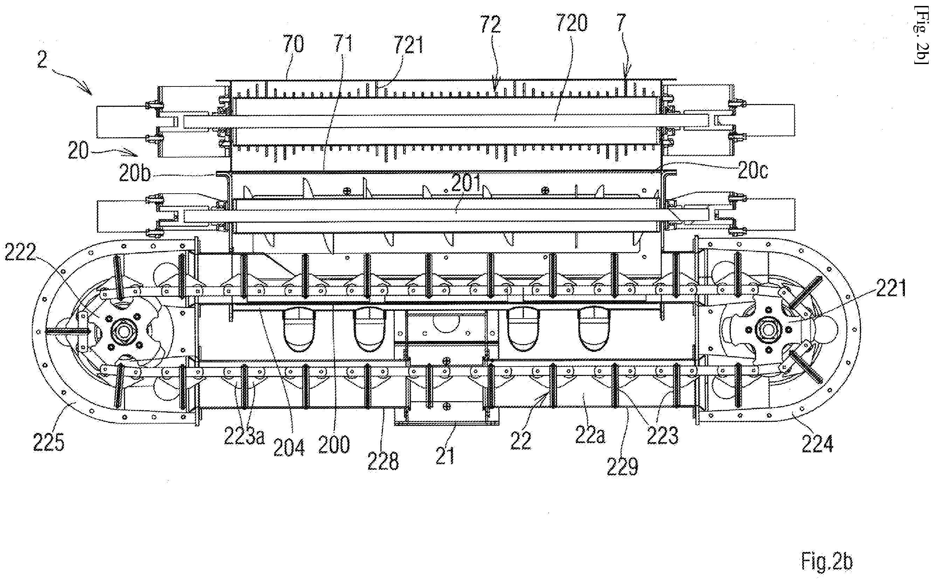

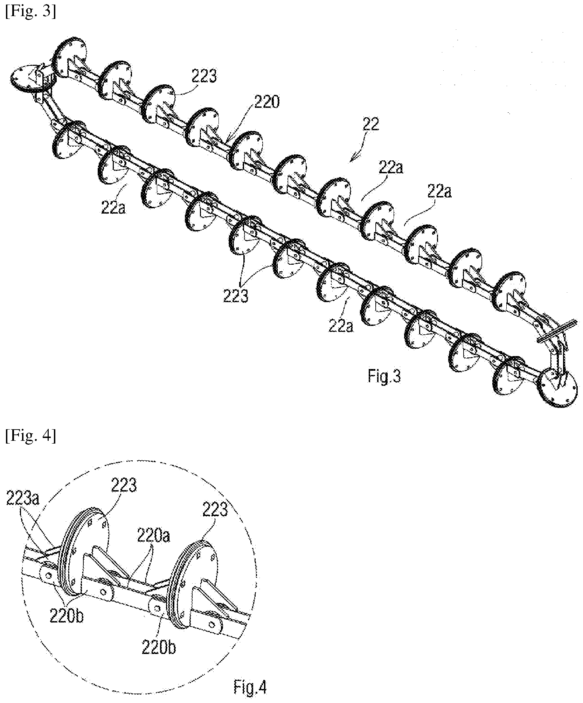

Le convoyeur 22 à cellules 22a est formé d'une chaîne sans fin 220 tendue entre une roue menée 221 et une roue menante 222 accouplée à un organe moteur, et de palettes 223 équidistantes, solidarisées à la chaîne sans fin 220 et se développant de manière perpendiculaire par rapport à cette dernière. Chaque cellule 22a est définie par l'intervalle entre deux palettes 223 consécutives. Comme on peut le voir en figures [Fig.2b] et [Fig.3], la chaîne sans fin 220 forme deux brins rectilignes dont le premier brin, ou brin supérieur de chargement, traverse de part en part la zone amont 20, et dont le second ou brin inférieur de délivrance traverse de part en part la zone aval 21.

Chaque palette 223 est dotée de deux faces - frontale et dorsale -, de préférence planes et parallèles, réunies l'une à l'autre par une face périphérique portant au moins un joint d'étanchéité. Par face frontale, il faut entendre la face située dans le sens du mouvement du convoyeur 22 et par face dorsale celle opposée au sens du mouvement de ce convoyeur.

La chaîne sans fin 220 est formée de maillons intérieurs 220a et extérieurs 220b articulés les uns aux autres par l'entremise d'axes de liaison. Les maillons intérieurs 220a sont formés de deux plaquettes rectangulaires, parallèles, intérieures, tandis que les maillons extérieurs 220b sont formés de deux plaquettes rectangulaires, parallèles, extérieures, les palettes 223 étant fixées aux maillons extérieurs 220b. De préférence, chaque palette 223 est dotée de deux fentes parallèles s'étendant de la face frontale à la face dorsale, dans lesquelles sont engagées les plaquettes extérieures du maillon auquel elle est fixée. Chaque palette 223 chevauche la zone médiane du maillon extérieur 220b auquel elle est fixée et se développe perpendiculairement à ce dernier.

Le convoyeur 22 est mobile dans des conduits creux rigides formés par un premier conduit recevant la zone amont 20 de chargement, par un second conduit opposé au précédent, recevant la zone aval 21 de délivrance et par des boîtiers d'extrémité amont 224 et aval 225 dans lesquels sont installées les roues menée 221 et menante 222. Le premier conduit rigide est formé de deux premiers segments de conduit, l'un amont 226 et l'autre aval 227. Le premier segment amont 226 est raccordé d'une part au boîtier amont 224 et d'autre part à la zone amont 20 de chargement, tandis que le premier segment aval 227 est raccordé à la zone amont 20 de chargement et au boîtier aval 225. De même, le second conduit rigide est formé de deux seconds segments de conduit, l'un amont 228 et l'autre aval 229. Le second segment amont 228 est raccordé d'une part au boîtier aval 225 et d'autre part à la zone aval 21 de délivrance, tandis que le second segment aval 229 est raccordé à la zone aval 21 et au boîtier amont 224.

Avantageusement, le premier segment aval 227 pénètre par une partie amont, dans la zone amont 20 de chargement et présente dans cette zone une extrémité biseautée 227a. Celle-ci facilite l'introduction de la matière végétale dans le premier segment aval 227 et réduit les risques de formation de bouchons à ce niveau. Toutefois, un bouchon au niveau de l'extrémité biseautée ou immédiatement en aval de cette dernière peut constituer un obstacle important à la progression du convoyeur 22. C'est pourquoi, l'extrémité biseautée 227a pourra présenter des arêtes coupantes aptes à sectionner un bouchon sous l'effet du mouvement d'avance du convoyeur.

Selon une première forme de réalisation, chaque palette 223 présente un contour circulaire. Selon une seconde forme de réalisation, chaque palette 223 présente un contour substantiellement rectangulaire dont un des bords se développe selon un arc de cercle. La section des segments de conduit et les boîtiers amont 224 et aval 225 sont adaptés en conséquence.

De préférence, les palettes 223 sont solidarisées à la chaîne sans fin 220 de manière excentrée afin de favoriser le remplissage des cellules. Dans cette configuration, la chaîne 220, dans la zone aval 20 de chargement, est située à proximité du fond 200 de cette dernière, tandis que les palettes 223 s'étendent depuis le fond 200 et pour la plus grande part depuis la chaîne vers l'ouverture de chargement 20a de la zone aval 20.

Les palettes 223 avec leur maillon extérieur pourraient s'incliner trop fortement vers l'arrière ou vers l'avant en considérant le sens du mouvement du convoyeur 22. Pour pallier cet inconvénient, à chaque face dorsale et frontale de chaque palette 223 est fixé un talon anti-basculement 223a limitant l'amplitude du basculement de la palette correspondante en prenant appui sur la chaîne 220 et plus particulièrement sur les maillons intérieurs 220a adjacents en fin de basculement. L'angle de basculement de chaque palette est de préférence inférieur à cinq degrés vers l'avant et cinq degrés vers l'arrière.

La zone amont 20 de chargement comprend un châssis 20b formé par une trémie. Le fond 200 de la zone amont 20 forme une goulotte dans laquelle évolue le convoyeur 22. Le fond 200 épouse le contour de chaque palette 223 de sorte que chaque palette 223 passe dans la zone amont 20 de chargement en glissant sur le fond 200.

Selon une forme pratique de réalisation, la trémie formant le châssis 20b de la zone amont 20 comprend deux flancs longitudinaux et deux flancs latéraux amont, aval, dont les bordures supérieures déterminent une bouche de chargement 20c, cette dernière étant de forme rectangulaire. Les flancs longitudinaux se développent parallèlement à l'axe longitudinal du brin supérieur ou inférieur de la chaîne sans fin 220. Les flancs latéraux sont quant à eux transversaux aux flancs longitudinaux. Le flanc latéral amont, en considérant le sens du mouvement du convoyeur 22 dans la zone amont 20 de chargement, présente une ouverture dans laquelle est engagée l'extrémité aval du premier segment amont 226 de conduit. Le flanc latéral aval présente une ouverture dans laquelle est engagé le premier segment aval 227 de conduit.

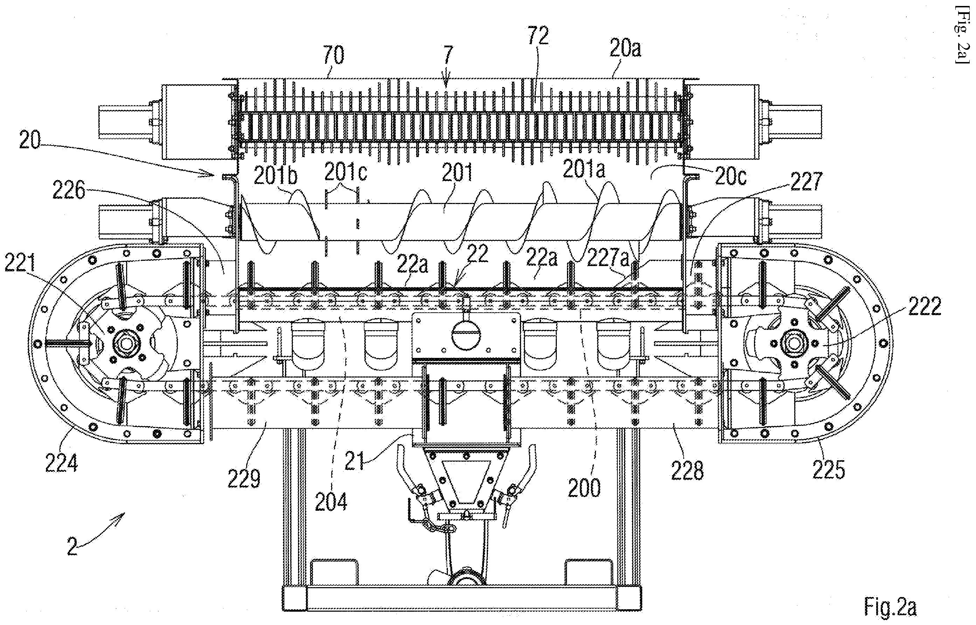

La zone amont 20 de chargement, au-dessus du convoyeur 22, parallèlement au fond 200 et aux premiers segments amont 226 et aval 227 de conduit, comporte une vis égalisatrice 201 d'Archimède, propre à répartir la matière végétale dans les différentes cellules 22a lors de leur passage dans la zone amont 20, sur le fond 200. Comme on peut le voir, cette vis égalisatrice 201, extérieurement au châssis 20b, est accouplée à un organe moteur d'entraînement en rotation. La vis égalisatrice 201 pourra ne comporter qu'un seul filet, auquel cas son mouvement de rotation sera tel que les matières seront entraînées à contre-courant, c'est-à-dire en sens inverse de leur mouvement impulsé par le convoyeur. Selon une première variante, la vis égalisatrice 201 pourra présenter deux filets consécutifs 201a, 201b, à pas opposés, de longueurs égales, permettant de rassembler la matière végétale dans la zone médiane de la trémie et non à ses extrémités. Selon une variante préférée, montrée en figures [Fig.2a] et [Fig.2b], la vis égalisatrice 201 comporte deux filets 201a, 201b à pas opposés de longueurs inégales, dont le plus long 201a imprime à la matière végétale un mouvement à contre-courant depuis une zone située au-dessus de l'extrémité biseauté 227a du premier segment aval 227 de conduit en direction d'une une zone située au-dessus de l'extrémité aval du premier segment amont 226 de conduit, et dont l'autre filet 201b, en imprimant à la matière végétale un mouvement dans le même sens que celui du convoyeur, depuis une zone située immédiatement au-dessus de l'extrémité aval du premier segment amont 226 de conduit, s'oppose à l'engorgement de cette dernière.

De préférence, la vis égalisatrice 201 est dotée d'éléments de dislocation 201c radiaux, rigides, de préférence sous forme de doigts rectilignes, aptes d'une part à désagréger les éventuels amas de matière végétale et d'autre part à aérer cette matière pour en faciliter le transport ultérieur par le convoyeur 22. Selon une forme pratique de réalisation, ces éléments radiaux 201c sont disposés entre les deux filets 201a, 201b, ces derniers étant écartés l'un de l'autre.

Additionnellement, pour réduire encore le risque de formation de bouchons dans la partie interne du premier segment aval 227, au niveau de son extrémité biseautée 227a ou immédiatement en aval de cette dernière, est prévu un extracteur mobile 202 assujetti à pénétrer périodiquement dans ledit premier segment aval au travers d'une ouverture pratiquée dans celui-ci. Cette disposition permet de balayer l'intérieur du premier segment aval 227 et de la cellule 22a présente dans cette partie interne de la zone amont 20, de manière à en chasser les éventuels amas de matière végétale.

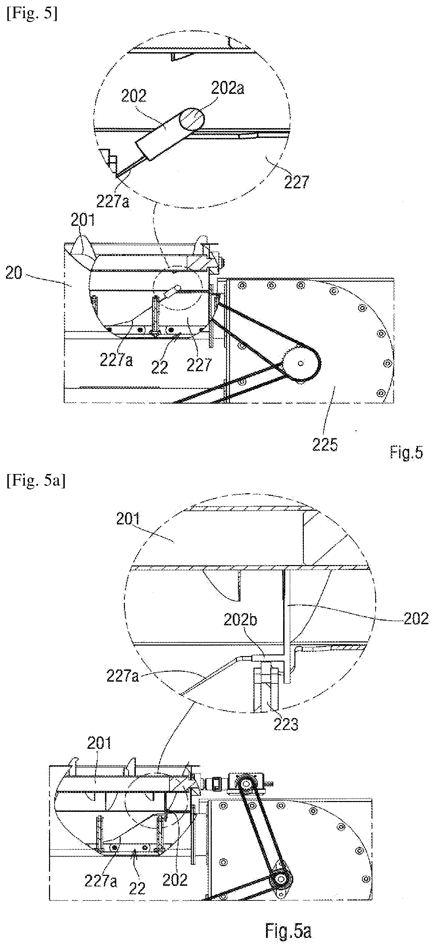

Selon une première forme de réalisation ([Fig.5]), l'extracteur mobile 202 est formé par une tige rigide rotative, mobile selon une trajectoire contenue dans un plan géométrique diamétral à la partie interne à la trémie 20 du premier segment aval 227 de conduit. Selon cette forme, l'extracteur mobile 202 est porté radialement par un arbre 202a d'entraînement en rotation monté sur des paliers d'extrémité, et forme une saillie radiale sur ledit arbre 202a. Dans ce cas, le mouvement de l'extracteur 202 et le mouvement du convoyeur 22 sont synchronisés par une transmission de mouvement appropriée afin d'écarter le risque de télescopage entre eux.

Selon une seconde forme de réalisation ([Fig.5a]), l'extracteur mobile 202, toujours formé par au moins une tige rigide, est fixé radialement à l'arbre de la vis égalisatrice 201. Dans ce cas, le mouvement de l'extracteur 202 et le mouvement du convoyeur 22 sont toujours synchronisés. Préférentiellement, la synchronisation est réalisée de manière que l'extracteur 202 passe à peu de distance de la face frontale de chaque palette 223 et agit sur la matière présente à ce niveau. Avantageusement, la ou chaque tige rigide constitutive de l'extracteur mobile 202 est dotée d'un doigt radial 202b apte à balayer la partie supérieure de la palette pour en chasser la matière végétale.

Selon une autre forme de réalisation, non représentée, l'extracteur mobile 202 est formé d'un corps élastiquement déformable, par exemple en matière de synthèse, auquel cas le mouvement de rotation de l'extracteur 202 et le mouvement du convoyeur 22 peuvent être désynchronisés.

Avantageusement, l'unité 2 de transfert et de distribution comporte un moyen d'aspiration en relation de communication avec au moins la zone amont 20 de chargement et avec les cellules 22a du convoyeur 22 présentes dans ladite zone amont, ledit moyen d'aspiration étant apte à créer une dépression dans lesdites cellules 22a, pour aspirer les poussières que pourrait transporter la matière végétale et pour faciliter le complet remplissage desdites cellules 22a. De cette manière, la quantité de poussières transportées par la matière végétale est particulièrement réduite et le rendement de l'unité de transfert 2 se trouve amélioré du fait d'un meilleur remplissage des cellules 22a.

Ce moyen d'aspiration comprend une chambre d'aspiration 204 ([Fig.2b]) en relation de communication avec la zone amont 20 de chargement et un ensemble 5 d'aspiration et de refoulement d'air ([Fig.21]) intégrant un collecteur 5b de poussières, ledit ensemble 5 comportant une bouche 50 d'aspiration d'air connectée à la chambre d'aspiration 204 et une bouche 51 de refoulement d'air épuré formée par la bouche de refoulement d'air du collecteur 5b de poussières. Ce collecteur 5b de poussières peut être formé par un filtre, par un cyclone et par tout autre moyen de dépoussiérage approprié.

La chambre d'aspiration 204 est formée dans l'unité 2 de transfert et de distribution. Pour établir une communication entre la chambre d'aspiration 204 et la zone amont 20 de chargement, l'une des parois de cette dernière est perforée et constitue l'une des parois de la chambre d'aspiration 204. Selon une forme pratique, cette paroi perforée se présente sous forme d'une grille dont chaque perforation est d'une taille suffisante pour permettre le passage des poussières mais insuffisante pour autoriser le passage de la matière végétale. Comme on le comprend, la taille de chaque perforation détermine la taille maximale des poussières et débris pouvant être aspirés. La grille perforée pourra être montée de manière amovible dans l'unité 2 afin d'être aisément remplacée par une autre mieux adaptée à la taille des poussières et débris transportés par une matière végétale différente.

Avantageusement, cette paroi perforée constitue le fond 200 de la trémie constitutive de la zone amont 20 de chargement. Une telle disposition, outre l'aspiration des poussières, favorise le remplissage des cellules et se révèle particulièrement utile lorsque les matières à transférer sont légères (paille, foin et autres). Comme dit précédemment, le fond 200 épouse le contour des palettes 223 qui, en venant au contact du fond 200, balaient ce dernier et le nettoient constamment.

La zone amont 20 de chargement que comporte l'unité 2 peut être équipée d'un module 7 de démêlage, apte à accomplir le démêlage, la dislocation des amas, ainsi qu'un broyage de la matière végétale. Ce module 7 reçoit la matière végétale de la source 1 et, après démêlage, dislocation et broyage, la déverse par gravité sur la vis égalisatrice 201. Selon la forme préférée de réalisation, le module 7 est disposé au droit de la vis égalisatrice 201 et est fixé de manière amovible au châssis 20b que comporte la zone amont 20. Selon une variante d'exécution, le module 7 est séparé dudit châssis en étant toujours disposé sur le trajet de la matière végétale entre la source 1 et la zone amont 20.

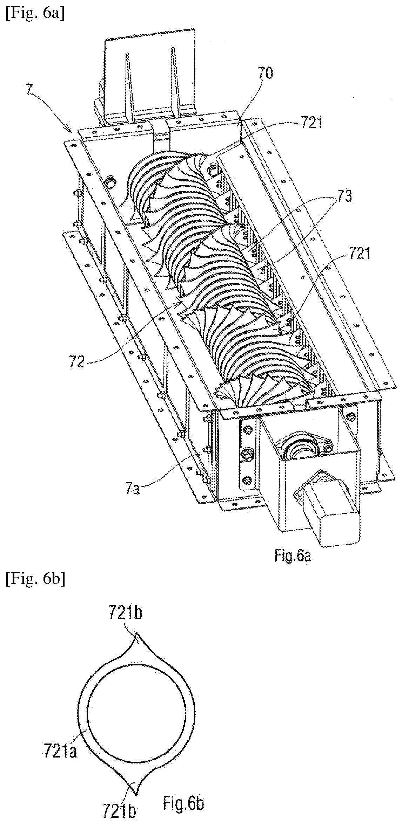

Le module 7 de démêlage ([Fig.6a]) comporte une bouche rectangulaire d'introduction 70 de la matière végétale en relation de communication avec la source 1 et à l'opposé, une bouche 71 de délivrance de la matière végétale en relation de communication avec une bouche 20c de chargement que comporte la zone amont 20. L'ouverture de chargement 20a, dans le cas où le module 7 de démêlage est présent, est formée par la bouche d'introduction 70 de ce dernier. En l'absence de module 7 de démêlage, l'ouverture de chargement 20a est formée par la bouche de chargement 20c.

Selon une forme pratique, le module 7 de démêlage est formé d'une trémie 7a dans le volume de laquelle est monté en rotation un rotor 72 démêleur et/ou broyeur, motorisé, formé d'un arbre 720 ([Fig.2b]) sur lequel sont enfilés des éléments radiaux 721 de démêlage et/ou de broyage, disposés côte à côte. Ces éléments radiaux 721 pourront être associés fonctionnellement à des contre-couteaux 73 portés par une structure commune fixée de manière amovible à la trémie 7a. Le rotor 72 est engagé par son arbre sur des paliers d'extrémité fixés à la trémie 7a et, extérieurement à cette dernière, est accouplé à un organe moteur d'entraînement en rotation. Chaque élément radial 721 présente un noyau central 721a doté d'un alésage traversant par lequel il est enfilé sur l'arbre 720 et au moins une forme triangulaire 721b de démêlage ou de broyage formant une saillie radiale par rapport au noyau central et présentant une extrémité libre en pointe.

Préférentiellement, les éléments radiaux 721 sont décalés angulairement les uns par rapport aux autres, de préférence d'une valeur constante, et les extrémités en pointe des formes triangulaires 721b de ces éléments radiaux 721 définissent au moins deux hélices consécutives, à pas opposés, permettant de rassembler la matière végétale démêlée ou broyée en zone centrale du module 7 de démêlage, plus précisément en zone centrale de la trémie 7a. Cette disposition en hélice permet de plus, une attaque progressive de la matière végétale.

De préférence, chaque élément radial 721 présente deux formes triangulaires diamétralement opposées. Ainsi, les éléments radiaux 721 par les extrémités libres de leurs formes triangulaires définissent quatre hélices opposées deux à deux.

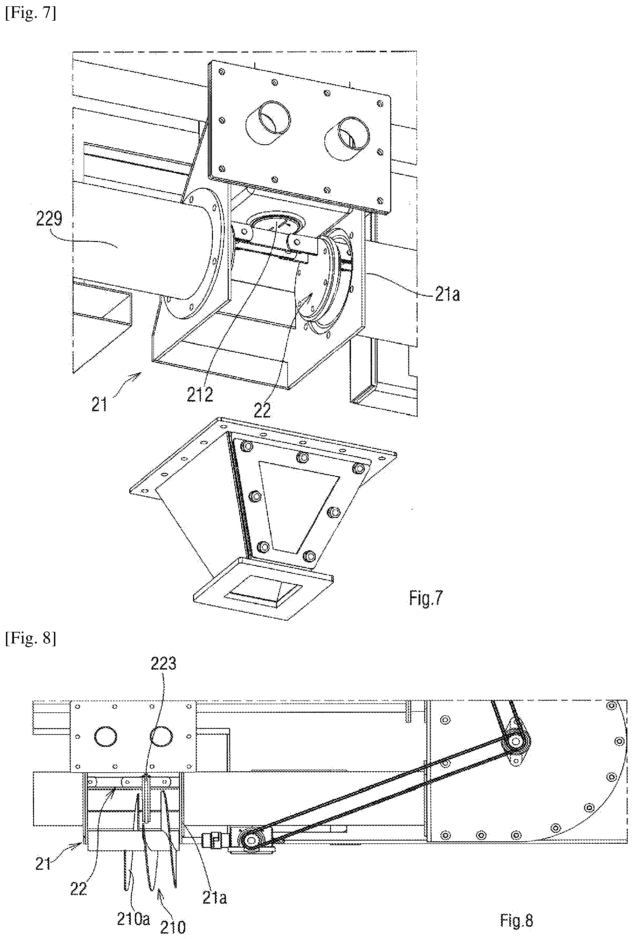

La zone aval 21 de délivrance de l'unité 2 est formée par un boîtier 21a doté d'une bouche d'introduction du courant gazeux produit par le générateur 4 et d'une ouverture de délivrance de la matière végétale opposée à la bouche d'introduction du courant gazeux. Cette bouche est connectée par une conduite 40 de transport de fluide gazeux, au générateur 4 ([Fig.14] à [Fig.17], [Fig.21]). Le boîtier 21a est traversé de part en part par le brin inférieur de délivrance que présente le convoyeur 22, ainsi que par le courant gazeux sous pression délivré par le générateur 4. La direction du courant gazeux est transversale à celle du brin inférieur de délivrance que présente le convoyeur 22 afin que les cellules 22a soient balayées par ce courant gazeux et que la matière végétale soit chassée vers l'ouverture de délivrance et vers le moyen de transport 3. Pour renforcer cet effet de chasse, le courant gazeux est introduit dans la zone aval 21 de délivrance par une buse 212 ([Fig.7]) apte à augmenter la vitesse du flux. Cette buse peut être rotative afin d'optimiser le balayage de chaque cellule 22a du convoyeur 22. La buse 212 équipe la bouche d'introduction précitée ou est en relation de communication avec cette dernière. Elle est située à l'opposé de l'ouverture de délivrance de la matière végétale que comporte le boîtier 21a, le brin inférieur de délivrance que présente le convoyeur 22, évoluant entre la buse 212 et l'ouverture de délivrance.

Le moyen de transport 3 est de préférence formé par une conduite souple, au moins en partie, et porte en extrémité un coude de raccordement 211 par lequel il est raccordé de manière amovible au boîtier 21a.

Le générateur 4 comporte une bouche d'aspiration d'écoulement gazeux épuré et une bouche de sortie d'écoulement gazeux en relation de communication avec la zone aval 21 de délivrance et plus particulièrement avec la buse 212 par l'entremise de la conduite 40 de transport de fluide gazeux. Le générateur peut être un compresseur d'air ou bien une ou plusieurs turbines disposées en série ou en parallèle.

Alternativement, le générateur 4 est formé par l'ensemble 5 d'aspiration et de refoulement. Selon cette forme de réalisation, la bouche 51 de refoulement d'air épuré est en relation de communication par l'entremise d'une conduite de transport de fluide gazeux, avec la zone aval 21 de délivrance. Ceci réduit le coût de l'installation.

De préférence, la zone aval 21 de délivrance comporte un extracteur mécanique 210 de matière végétale, apte à balayer ladite zone aval 21 et la ou les cellules 22a qui s'y trouvent pour parfaire l'extraction de la matière végétale non chassée par le courant gazeux sous pression. L'extracteur 210 facilite également la distribution de la matière végétale au moyen de transport 3 et égalise cette distribution. Par ailleurs, l'extracteur 210 contribue à disloquer les amas qui pourraient se présenter en zone aval 21 de délivrance et à aérer par brassage la matière végétale pour faciliter son déplacement dans le moyen de transport 3.

Selon une première forme ([Fig.8]), l'extracteur mécanique 210 est constitué par au moins un filet hélicoïdal 210a rigide, tronqué, apte à balayer chaque cellule 22a, formé sur un arbre rotatif motorisé, monté sur des paliers portés par le boîtier 21a constitutif de la zone aval 21 de délivrance. Cet arbre rotatif est parallèle à la direction du mouvement du second brin de la chaîne sans fin du convoyeur 22. Le mouvement de l'arbre rotatif et le mouvement du convoyeur 22 sont synchronisés afin que le filet 210a ne puisse pas heurter les palettes 223 du convoyeur 22. À cette fin, l'arbre rotatif extérieurement au boîtier 21a, est accouplé par une transmission de mouvement, à l'une des roues menante ou menée d'entraînement de la chaine 220 du convoyeur 22.

Selon d'autres variantes, l'extracteur mécanique de matière végétale est constitué d'un arbre rotatif équipé d'éléments radiaux.

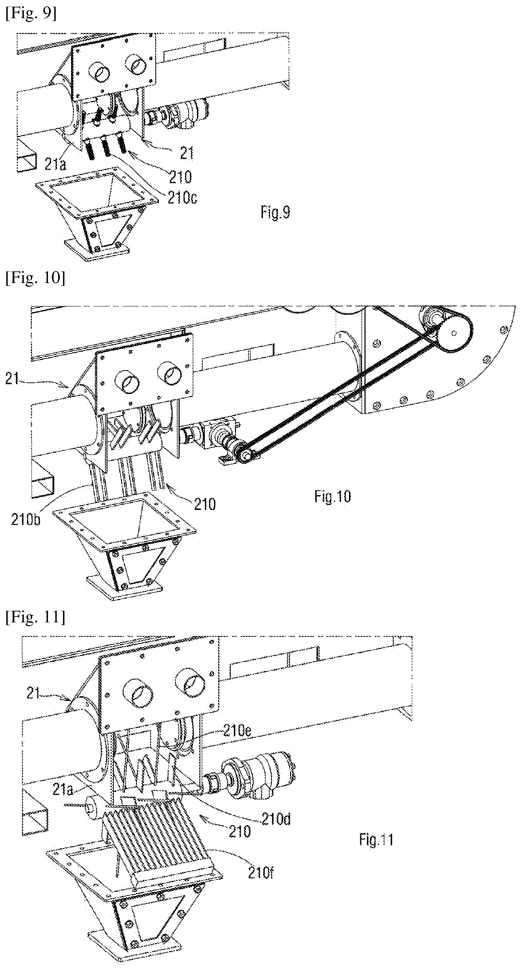

Selon une autre forme de réalisation ([Fig.9]), l'extracteur mécanique 210 comporte au moins un élément longiforme souple, tel un câble, un fléau ou un doigt souple 210c en matériau de synthèse, apte à balayer chaque cellule 22a, porté radialement par un arbre rotatif motorisé. Cet arbre rotatif est monté sur des paliers portés par le boîtier 21a constitutif de la zone aval 21 de délivrance. Il est parallèle à la direction du mouvement du second brin de la chaîne sans fin du convoyeur 22. Selon cette forme, le mouvement de l'extracteur 210 et du convoyeur 22 n'ont nul besoin d'être synchronisés. L'arbre rotatif est entraîné par un moteur externe au boîtier 21a.

Selon une autre forme de réalisation ([Fig.10]), l'extracteur mécanique 210 est constitué par au moins une tige rigide 210b apte à balayer chaque cellule 22a, portée radialement par un axe rotatif motorisé, parallèle à la direction du mouvement du convoyeur 22, monté sur deux paliers d'extrémité portés par le boîtier 21a. Préférentiellement, seront prévues plusieurs tiges rigides 210b se développant de manière radiale sur l'axe rotatif. Le mouvement de l'axe rotatif et du convoyeur 22 seront synchronisés afin que lesdites tiges ne viennent pas heurter les palettes 223 du convoyeur 22. À cette fin, l'arbre rotatif, extérieurement au boîtier 21a, est accouplé par une transmission de mouvement à l'une des roues menante ou menée d'entraînement de la chaine 220 du convoyeur 22.

Selon une autre forme de réalisation ([Fig.11]), l'extracteur mécanique 210 est formé d'un arbre rotatif monté sur paliers, s'étendant dans la direction du mouvement du second brin de la chaîne sans fin du convoyeur, et portant au moins :
- un élément longiforme 210e souple sous forme de câble ou semi rigide sous forme de fléau, apte à balayer chaque cellule 22a, et,
- au moins un couteau longiforme 210d de longueur moindre pour demeurer en deçà de la trajectoire des palettes 223 du convoyeur 22.

Le couteau longiforme 210d est associé à au moins un contre-couteau 210f porté par le boîtier 21a. Selon cette forme de réalisation, le mouvement de l'extracteur 210 et du convoyeur n'ont nul besoin d'être synchronisés. L'arbre rotatif est entraîné en rotation par un moteur externe au boîtier 21a.

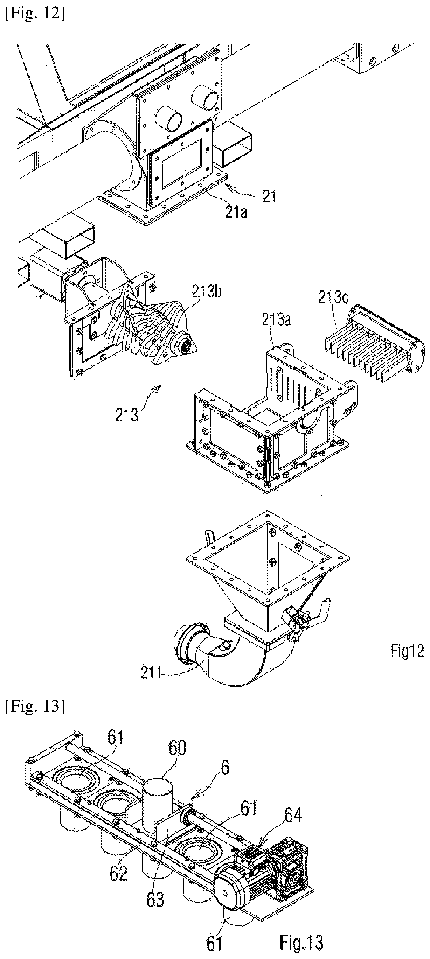

De préférence, la zone aval 22 de délivrance est équipée d'un broyeur 213, comme le montre la [Fig.12]. Ce broyeur permet de disloquer les éventuels amas de matière végétale distribués à la zone aval de délivrance. Avantageusement, il est fixé de manière amovible au boîtier 21a. Il est formé d'un châssis 213a dans lequel est monté sur deux paliers d'extrémité, un arbre rotatif motorisé portant une série de contre-couteaux 213b, associée à une série de couteaux fixes 213c portés par le châssis 213a. L'arbre rotatif est accouplé extérieurement au boîtier 21a à un organe moteur.

Chaque contre-couteau 213b présente un noyau central doté d'un alésage traversant par lequel il est enfilé sur l'arbre rotatif, et au moins une forme triangulaire en saillie radiale par rapport au noyau central et présentant une extrémité libre en pointe. Les contre-couteaux 213b sont décalés angulairement les uns par rapport aux autres, afin que leurs extrémités libres définissent au moins une hélice. Les éventuels amas de matière végétale sont alors attaqués de manière progressive. Avantageusement, chaque contre-couteau présente trois formes triangulaires décalées deux à deux de 120 degrés. Ainsi, les extrémités libres des contre-couteaux définissent trois hélices.

Selon une forme avantageuse, l'unité 2 comporte, sur le trajet des cellules 22a entre la zone amont 20 et la zone aval 21, au moins un point d'injection dans lesdites cellules, de produits désinfectants. La majeure partie des germes sont ainsi éliminés de la matière végétale avant son transport vers son lieu d'utilisation ou de stockage. Les produits désinfectants peuvent se présenter à l'état solide par exemple en poudre, ou sous forme de fluide liquide ou gazeux. Ils peuvent être de la vapeur sèche, ou humide à forte température, de l'ozone, du gaz carbonique, ou autres biocides.

L'unité 2 de transfert et de distribution peut alimenter une aire d'élevage ou bien plusieurs aires d'élevage séquentiellement. À cette fin ([Fig.13]), une vanne d'aiguillage 6 comportant une bouche d'alimentation 60 et plusieurs bouches de distribution 61, peut être disposée sur le moyen de transport 3, ce dernier étant constitué par une conduite souple primaire d'alimentation, et par plusieurs conduites secondaires de distribution pouvant être rigides. La conduite primaire est connectée d'une part à la zone aval 21 de délivrance et d'autre part à la bouche d'alimentation 60 de la vanne d'aiguillage 6, tandis que les conduites secondaires sont connectées aux bouches de distribution 61 de la vanne 6 prévues pour l'alimentation en matière végétale des diverses aires d'élevage.

Comme on peut le voir en [Fig.13], la vanne 6 est formée d'un corps fixe 62 équipé des bouches de distribution 61, d'un tiroir mobile 63 équipé de la bouche d'alimentation 60, et d'un moyen moteur 64 apte à déplacer le tiroir mobile 63 afin de positionner la bouche d'alimentation 60 dans l'alignement de l'une des bouches de distribution 61. Selon une forme pratique de réalisation, les bouches de distribution 61 sont alignées et le déplacement du tiroir est linéaire. Le moyen moteur est formé d'un organe moteur avec arbre de sortie rotatif et d'une transmission de mouvement formée d'une vis accouplée à l'organe moteur et d'un écrou engagé en vissage sur la vis et fixé ou formé dans un élément du tiroir 63.

Il est parfois utile d'inverser le sens de l'écoulement gazeux porteur dans le moyen de transport 3, notamment pour disloquer les bouchons de matière végétale qui pourraient s'y être formés. À cette fin, l'unité 2 de transfert et de distribution est dotée d'au moins une vanne pilotée installée sur la conduite 40 et sur le moyen de transport 3, apte à la commande à isoler du générateur 4 et du moyen de transport 3, la zone aval 21 de délivrance et à établir une communication directe entre la conduite 40 et le moyen de transport 3. Dans cette situation, le générateur 4 fonctionne en aspiration pour créer dans la conduite 40 et dans le moyen de transport 3 une dépression apte à inverser le sens de l'écoulement gazeux dans ce moyen de transport 3.

L'inversion du sens d'écoulement gazeux peut être déclenchée manuellement ou automatiquement à partir d'informations délivrées par des capteurs de pression installés sur le circuit d'écoulement gazeux. Cette inversion se traduit dans la plupart des cas par la dislocation du bouchon. En cas de persistance, ces opérations seront répétées plusieurs fois avant arrêt complet de l'unité 2 dans l'attente d'une intervention manuelle sur le moyen de transport 3. De telles vannes sont représentées en [Fig.14] et [Fig.15]. On y observe une première vanne 41 disposée sur le circuit d'écoulement gazeux entre le générateur 4 et la zone aval 21 de délivrance et plus particulièrement sur la conduite de transport 40, et une seconde vanne 30 disposée sur la conduite constitutive du moyen de transport 3. Les vannes 41 et 30 sont chacune du type piloté, deux voies et trois orifices, et présentent un premier orifice commun aux deux voies, un deuxième orifice appartenant à la première voie et un troisième orifice appartenant à l'autre voie, les deuxième et troisième orifices par action sur le ou les pilotes étant alternativement, par leur voie respective, mis en communication avec le premier orifice.

La conduite 40 est divisée en un segment amont 40a et en un segment aval 40b. Le segment amont 40a est raccordé d'une part au générateur 4 d'écoulement gazeux et d'autre part au premier orifice de la vanne 41. Le segment aval 40b est connecté d'une part au deuxième orifice de la vanne 41 et d'autre part à la bouche d'introduction du courant gazeux du boîtier 21a de la zone aval 21 de délivrance.

La conduite constitutive du moyen de transport 3 est divisée en un segment amont 3a et en un segment aval 3b. Le segment amont 3a est raccordé d'une part à l'ouverture de délivrance que présente la zone aval 21 et d'autre part au deuxième orifice de la vanne 30. La longueur de ce segment amont 3a sera la plus faible possible pour minimiser le risque de formation de bouchon dans ce segment amont 3a. Le segment aval 3b est connecté au premier orifice de la vanne 30. Les troisièmes orifices des vannes 30 et 41 sont connectés l'un à l'autre par une conduite de liaison 40c.

La détection d'un bouchon dans le segment aval 3b engendre l'arrêt du générateur 4, de l'unité 2, ainsi que de l'alimentation de cette dernière en matière végétale. Par la suite ([Fig.15]), par action sur les pilotes correspondants, le premier orifice de chaque vanne est mis en relation avec le troisième orifice afin qu'une communication directe soit établie entre le segment aval 3b et le segment amont 40a par l'entremise de la conduite d'aspiration 40c et des vannes 30 et 41. Par la suite, le générateur 4 est activé d'une façon que son sens de fonctionnement soit inversé. Dans cette situation temporaire, le générateur 4 fonctionne en aspiration et constitue une source de dépression grâce à laquelle le segment aval 3b, entre le bouchon et la vanne 30, est soumis à dépression. Ainsi, on peut inverser le sens de l'écoulement gazeux dans le segment aval 3b afin de déplacer le bouchon et le disloquer. Cette opération peut être répétée plusieurs fois en alternant mises en pression et dépression du segment aval 40b. Pour éviter que de la matière végétale s'introduise dans le générateur 4 lorsque ce dernier fonctionne en aspiration, un filtre 40d est disposé dans le segment amont 40a.

Selon une variante de réalisation, en lieu et place des deux vannes 41 et 30, on utilise une seule vanne 45 quatre voies, pilotée. On observe en [Fig.16] et [Fig.17] que deux des quatre voies de la vanne sont raccordées l'une à l'autre par la conduite 40c ; l'une des deux autres voies est raccordée au segment amont 40a et au segment aval 40b ;et la dernière voie est raccordée au segment amont 3a et au segment aval 3b.

La détection d'un bouchon dans le segment aval 3b se traduit par l'arrêt du fonctionnement de l'unité 2 de transfert et de distribution, l'arrêt de l'alimentation de cette dernière en matière végétale et le déplacement du tiroir de la vanne 45 ([Fig.17]), afin de connecter l'un à l'autre les segments 3b et 40a par l'entremise de la conduite 40c. Dans cette situation, le générateur 4 fonctionne en aspiration et les segments 40b et 3a sont obturés par le tiroir de la vanne 45. Toujours pour éviter que de la matière végétale s'introduise dans le générateur 4, lorsque ce dernier fonctionne en aspiration, un filtre 40d approprié est disposé dans le segment amont 40a.

Comme dit précédemment, l'unité 2 de transfert et distribution est alimentée, de préférence par gravité, par une source 1 de matière végétale. Cette matière végétale, selon sa nature ou sa provenance, est susceptible de contenir des corps étrangers de dureté et de taille importantes de nature à endommager les organes mécaniques de l'unité 2. Pour cette raison, ladite unité 2 est pourvue en amont de sa zone amont 20, d'un séparateur 8 apte à générer au moins une lame d'air sous pression, de direction transversale au flux de matière végétale délivrée par la source 1, de largeur égale ou supérieure à la largeur dudit flux, apte à soutenir au-dessus du vide, et/ou au-dessus d'un réceptacle 85 de récupération approprié, le flux de matière végétale entrant dans ladite zone amont 20 et à permettre, avant introduction dans cette zone, la chute des corps étrangers pesants vers le réceptacle 85. Avantageusement, le séparateur 8 est conçu pour générer plusieurs lames d'air contigües, s'entrecroisant en périphérie.

Selon une forme pratique de réalisation ([Fig.18] et [Fig.19]), le séparateur 8 comprend un corps allongé horizontal dans lequel est formée une chambre de distribution 800 alimentée en air sous pression par un ou plusieurs tuyaux d'alimentation 803. À cette chambre de distribution 800 sont raccordées plusieurs buses 801 d'éjection d'air, s'étendant horizontalement, disposées selon au moins une rangée unique, aptes, chacune, à délivrer une lame d'air sous pression. Sous la rangée de buses 801, le corps allongé forme le réceptacle 85. Le séparateur 8 comprend en outre une paroi déflectrice 802 formant protection au-dessus de la rangée de buses 801, apte à conduire les corps étrangers pesants vers le réservoir 85 et à éviter que ces derniers heurtent les buses.

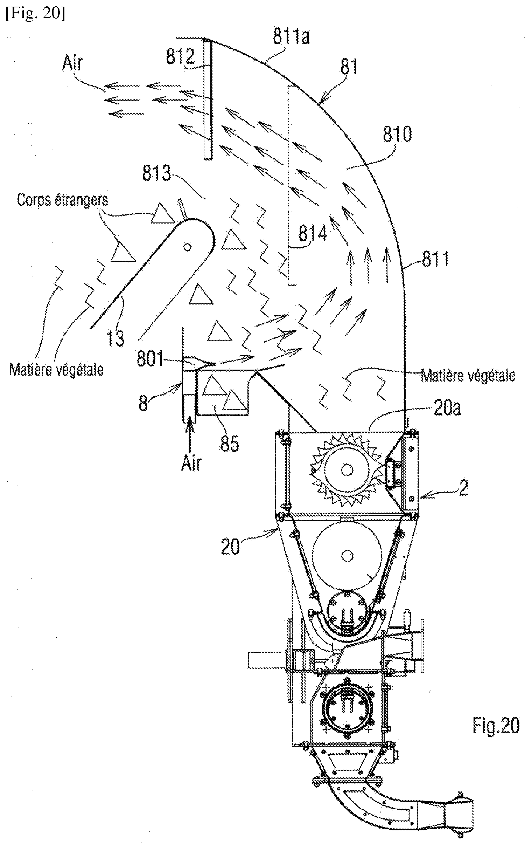

Le séparateur 8 est disposé dans une hotte 81 ([Fig.20]) coiffant la zone amont 20 de l'unité 2 de transfert et de distribution et plus particulièrement l'ouverture 20a de chargement. Cette hotte 81 est apte à conduire le flux de matière végétale délivré par la source 1 vers l'ouverture de chargement 20a, à canaliser le flux d'air délivré par la ou les buses 801 et à éviter ou réduire tout mouvement tourbillonnaire de ce flux d'air dans son volume interne. La hotte 81 est formée de deux parois latérales 810, d'une paroi arrière 811, d'une paroi supérieure 811a prolongeant sans angle vif la paroi arrière 811, et d'une paroi avant 812 verticale dans laquelle est formée, en partie inférieure, une ouverture 813 d'introduction de la matière végétale, prévue pour être en relation de communication avec la source 1. La paroi avant est raccordée à la paroi supérieure 811a.

Le séparateur 8 est fixé dans la hotte 81 immédiatement sous l'ouverture 813 d'introduction et est orienté en sorte que les lames d'air formées soient dirigées vers la paroi arrière 811. On note que le flux de matière végétale introduit dans le volume de la hotte 81 n'est que soulevé par les lames d'air et tombe par gravité dans l'ouverture de chargement 20a. Avantageusement, la paroi arrière 811 est cintrée pour diriger le flux d'air vers le haut et minimiser les tourbillons dans le volume interne de la hotte 81.

Avantageusement, la hotte 81 est apte à canaliser le flux d'air délivré par les buses 801 vers un ralentisseur 814 de flux d'air. Celui-ci est disposé dans le volume de la hotte 81 et est apte à diminuer la vitesse de progression du flux d'air vers le haut et vers la paroi avant 812. Il est formé par une cloison verticale perforée, disposée sur le trajet du flux d'air, fixée par sa bordure supérieure à la paroi 811a et s'étendant d'une paroi latérale 810 à l'autre. Cette cloison, par sa bordure inférieure, est écartée de la trajectoire du flux de matière végétale s'établissant entre l'ouverture 813 et l'ouverture de chargement 20a. Avantageusement, le ralentisseur forme un filtre apte à retenir les brins de matière végétale qui pourraient être transportés par le flux d'air issu des buses 801.

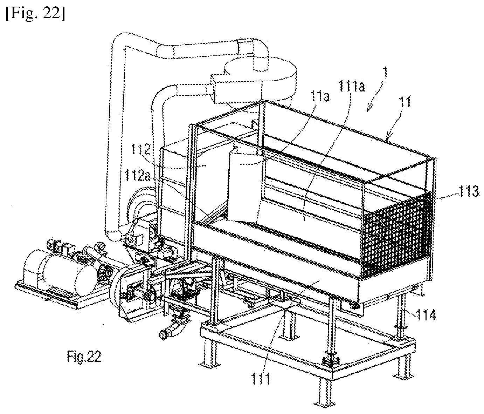

En figures [Fig.21] et [Fig.22], est représentée une installation de fourniture de matière végétale comportant une source 1 de matière végétale selon une première forme de réalisation, prévue pour l'alimentation de l'unité 2. Cette source 1 est formée d'au moins un poste de désagrégation de blocs compacts de matière végétale, tels balles de paille ou autres. Ce poste de désagrégation est apte à agir par arasement ou grattage d'un bloc de matière végétale qu'il reçoit afin d'en détacher, par déstructuration progressive, des brins ou des fragments, et ce en quantité régulée, et à délivrer ces brins ou fragments à l'unité 2, par une zone 10 de délivrance dont il est doté.

Le poste de désagrégation comprend un châssis 1a quadrangulaire monté sur piétement et supportant une enceinte 11, ainsi qu'un moyen de grattage 12 évoluant sur une sole de glissement 110a horizontale formant, en combinaison avec ledit moyen de grattage 12, le fond de l'enceinte 11. L'enceinte 11 est conçue pour recevoir un bloc compact de matière végétale, lequel va reposer sur la sole 110a et sur le moyen de grattage 12 pour être soumis à l'action de déstructuration et d'arasement de ce dernier. Le piètement est formé par des montants verticaux 114 installés aux quatre angles du châssis 1a. Le poste de désagrégation peut reposer directement sur le sol par l'entremise de semelles d'appui ou de roues. Le châssis 1a est formé par assemblage de deux longerons parallèles à deux traverses d'extrémité. Il reçoit en fixation la sole de glissement 110a, cette dernière étant fixée aux longerons et traverses du châssis.

Le moyen de grattage 12 s'étend de part et d'autre de la sole de glissement 110a et comporte une zone active, mobile en translation dans l'enceinte 11 sur la sole de glissement 110a, depuis l'extrémité arrière de l'enceinte 11 vers la zone de délivrance 10, cette dernière étant formée en avant de ladite enceinte. Celle-ci, de forme parallélépipédique, comporte deux parois latérales 111 verticales, une paroi avant 112 et une paroi arrière 113, dressées sur le châssis 1a et recevant des ridelles de rehaussement. Ces parois et ridelles définissent un volume interne parallélépipédique prévu pour recevoir au moins un bloc de matière végétale, par exemple une balle de paille parallélépipédique ou cylindrique. Pour faciliter le chargement d'un bloc, une ridelle de l'une des parois latérales 111 est montée articulée entre une position de fermeture selon laquelle elle est verticale et obture le volume interne, et une position d'ouverture selon laquelle elle s'étend vers le bas et dégage le volume interne de l'enceinte 11.

Alternativement, une des parois latérales 111 est articulée au châssis et agencée en chargeur. Elle est ainsi mobile entre une position de chargement de blocs et une position d'obturation de l'enceinte 11, sa manœuvre étant de préférence assistée par un ou plusieurs organes moteurs, tels des vérins hydrauliques. Selon une forme pratique, elle comporte deux flancs latéraux avant et arrière, ainsi qu'un retour à angle droit supérieur.

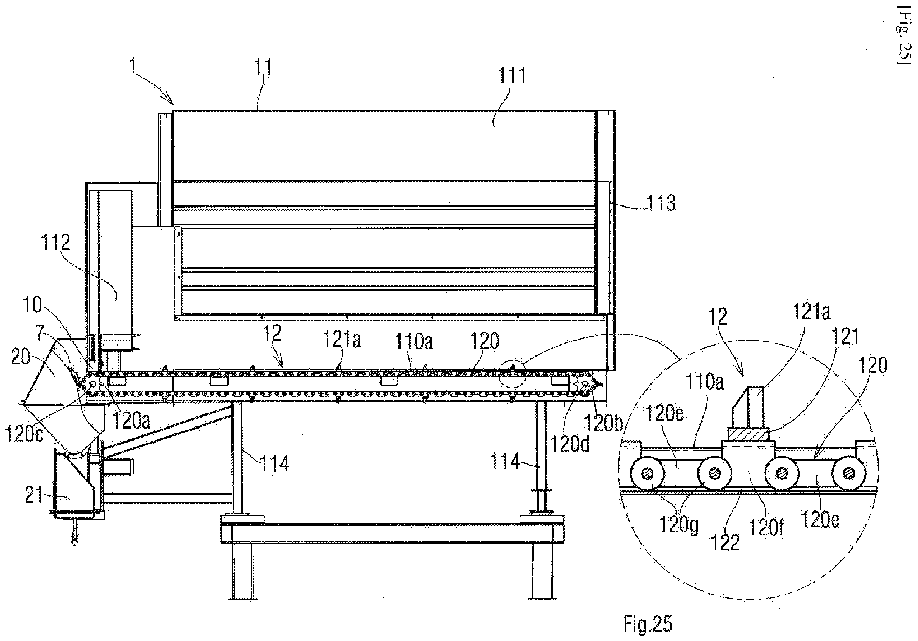

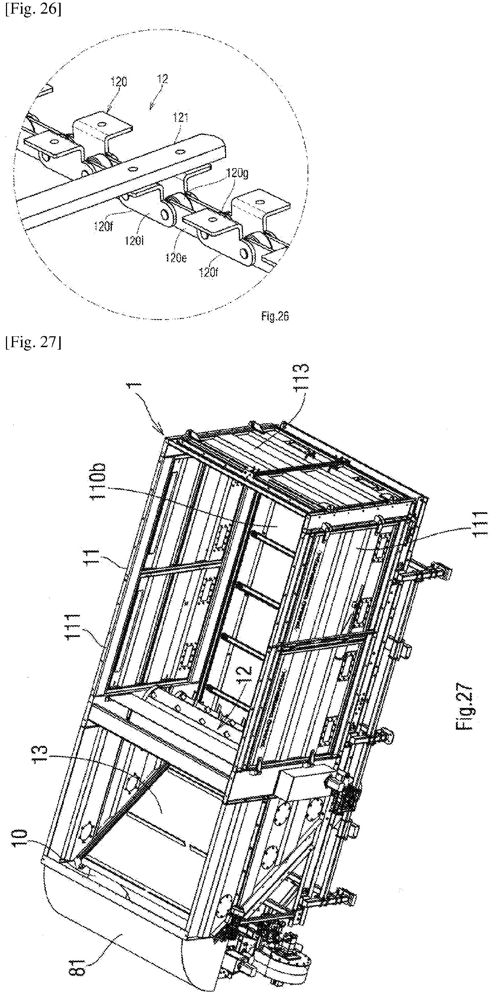

Selon une forme préférée de réalisation, le moyen de grattage 12 ([Fig.25], [Fig.26]) est formé d'au moins deux chaînes sans fin 120 à maillons, motorisées, disposées dans des plans verticaux parallèles, tendues entre des roues dentées menantes 120a et menées 120b et par des éléments de grattage 121 longiformes équidistants, fixés aux chaînes sans fin 120 et se développant de manière transversale par rapport à ces dernières et préférentiellement de manière perpendiculaire. Ces éléments de grattage 121 portent chacun au moins une dent de grattage 121a prévue pour pénétrer dans le bloc compact et en détacher des fragments ou des brins. Les chaînes 120 et les éléments de grattage 121 forment un tapis sans fin de grattage. Selon cette forme de réalisation, la partie supérieure du tapis forme la partie active du moyen de grattage 12, et évolue en regard ou contre la face supérieure de la sole de glissement 110a. La partie inférieure du tapis évolue, quant à elle, sous la sole de glissement 110a.

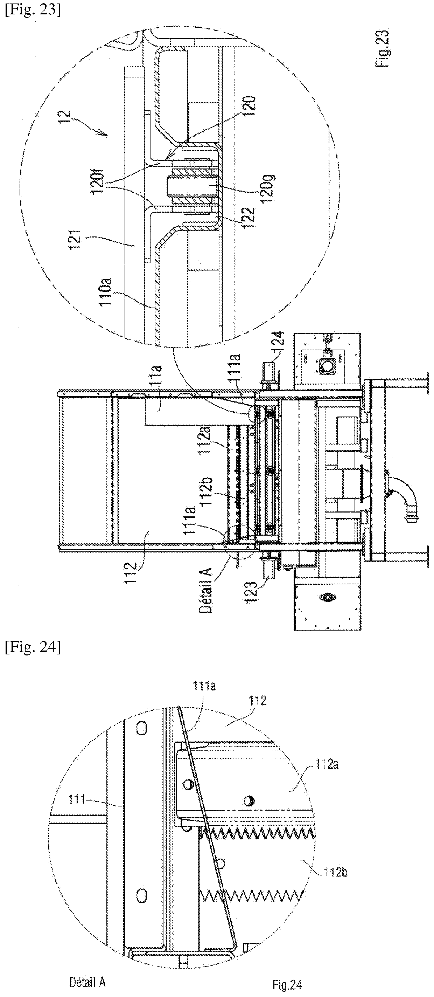

Les roues menante et menée 120a, 120b sont fixées respectivement sur un arbre menant 120c et sur un arbre mené 120d, chacun monté sur deux paliers d'extrémité fixés au châssis 1a. L'arbre menant 120c est accouplé à au moins un premier organe moteur 123 ([Fig.23]) de préférence du type hydraulique. Judicieusement, est prévu un organe moteur additionnel 124 qui sera activé pour accroître ponctuellement la puissance mécanique dudit moyen de grattage 12, l'organe moteur 123 étant quant à lui constamment activé lors du fonctionnement du moyen de grattage 12. Avantageusement, le brin actif de chaque chaîne 120 évolue dans une goulotte dédiée 122 portée par la sole de glissement 110a ou formée dans cette dernière. Chaque goulotte 122 et le brin actif de la chaîne 120 s'étendent depuis l'arrière de la sole de glissement 110a vers l'avant de cette dernière.

Chaque chaîne 120 ([Fig.25]) est formée d'une alternance de maillons de guidage 120e et de liaison 120f. Les maillons de guidage 120e sont prévus pour évoluer sur le fond de la goulotte 122 correspondante tandis que les maillons de liaison 120f assurent une liaison mécanique entre les maillons de guidage 120e et sont agencés pour supporter les éléments de grattage 121, et ce au-dessus de chaque goulotte 122.

Chaque maillon de guidage 120e est agencé sous forme d'un chariot et présente deux organes de roulement 120g consécutifs. Chaque maillon de liaison 120f est formé de deux flancs latéraux 120i montés articulés aux deux maillons de guidage 120e adjacents. Plus précisément, chaque flanc latéral 120i est articulé à l'axe du rouleau arrière du maillon de guidage 120e avant et à l'axe du rouleau avant du maillon de guidage 120e arrière. Chaque flanc de chaque maillon de liaison 120f présente une aile coudée à angle droit agencée pour recevoir en fixation un élément de grattage 121. Les ailes coudées de chaque maillon de liaison 120f évoluent au-dessus des bordures longitudinales de la goulotte 122 correspondante. Bien que tous les maillons de liaisons 120f soient aptes à recevoir de manière amovible des éléments de grattage 121, dans la pratique, seuls quelques-uns en sont effectivement équipés, en nombre dépendant essentiellement de la nature du bloc à déstructurer.

Il est possible aussi d'écarter les goulottes 122 de la sole de glissement 110a, afin d'augmenter la quantité de matière végétale entraînée par les éléments de grattage 121. Ainsi, chaque goulotte 122 sera ajustable en hauteur et reposera par son extrémité avant sur un excentrique avant et par son extrémité arrière sur un excentrique arrière (non représentés). Un même axe d'actionnement porte-excentrique peut recevoir les excentriques avant et un même axe d'actionnement porte-excentrique recevra les excentriques arrière de sorte que les goulottes 122 seront actionnées simultanément.

Par actionnement simultané des axes porte-excentriques, les différentes goulottes 122 seront écartées ou rapprochées de la sole de glissement 110a tout en demeurant parallèles à cette dernière. Par actionnement de l'un des deux axes porte-excentriques, les goulottes 122 seront inclinées par rapport à la sole de glissement. Ainsi, les goulottes 122 pourront être inclinées vers le haut depuis l'arrière vers l'avant. Une telle disposition sera adoptée pour entamer un bloc compact et prélever l'essentiel de la matière végétale en zone avant du bloc et non sur toute sa longueur. De cette manière, les efforts de grattage, dont l'intensité dépend de la valeur pondérale du bloc compact, seront maintenus dans une limite acceptable tant que le poids du bloc n'aura pas significativement diminué. On diminue ainsi les risques de blocage du mouvement du moyen de grattage. En revanche, lorsque le poids du bloc aura été réduit, les goulottes seront ramenées dans une position parallèle à la sole de glissement.

Selon une disposition avantageuse, le moyen de grattage 12 comporte trois chaînes 120, dont deux latérales et une médiane. On compense ainsi les efforts de flexion auxquels sont soumis les éléments de grattage 12 lors de l'action de désagrégation. Dans ce cas de figure, trois goulottes 122 seront prévues.

Selon une forme préférée de réalisation, les éléments de grattage 12 présentent une section droite de préférence rectangulaire. Chacun d'eux est équipé d'une ou de plusieurs dents de grattage 121a en saillie sur sa face supérieure. Chaque dent de grattage 121a se présente de préférence sous une forme parallélépipédique dotée à l'opposé de l'élément de grattage 121 qui la porte d'un biseau plan réalisé de telle sorte que la ligne de plus grande pente de ce dernier s'étende entre deux arêtes diagonalement opposées de la forme de la dent. De plus, ladite dent est disposée sur l'élément de grattage 121 de façon que le biseau soit tourné dans le sens du mouvement d'avance de la partie active de l'élément de grattage. Les dents 121a pourront adopter toute autre forme convenable, par exemple cylindrique. Elles sont chacune décalées latéralement sur leur élément de grattage par rapport à celles des deux éléments de grattage 12 contigus avant et arrière, de façon à balayer l'ensemble de la surface inférieure du bloc de matière végétale.

Entre le bord inférieur de la paroi avant 112 et le moyen de grattage 12, est ménagé un intervalle de régulation, formant un calibre pour s'opposer au passage d'amas de matière végétale de tailles importantes vers la zone de délivrance 10 qui s'étend depuis cet intervalle vers l'avant du moyen de grattage 12. Comme on le comprend, le bord inférieur de la paroi 112 est écarté de la trajectoire des dents de grattage 121a de la partie active du moyen de grattage 12, l'intervalle de régulation s'étendant entre cette trajectoire et le bord inférieur de la paroi 112. L'intervalle de régulation est suffisant pour laisser passer la matière végétale transportée par les éléments de grattage, mais insuffisant pour le franchissement des éventuels amas de matière végétale. Ces amas sont arrêtés par la paroi avant 112. Préférentiellement, le bord inférieur de la paroi 112 est dentelé afin de former une carde permettant d'orienter autant que possible, les brins de matière végétale transportés par le tapis. Cette carde a également un effet de cisaillement des brins. Avantageusement, la paroi avant 112, tout en étant perpendiculaire à la partie active du moyen de grattage 12, est disposée de manière oblique par rapport à la direction d'avancement de la partie active du moyen de grattage 12. En effet, cette disposition facilite la dislocation des amas de matière végétale et réduit la puissance mécanique nécessaire à l'entraînement du moyen de grattage.

La paroi avant 112 est avantageusement constituée d'un corps de paroi et d'un élément longiforme horizontal 112a formant peigne ou carde, dans lequel est formé le bord inférieur de la paroi avant. De préférence, cet élément longiforme 112a est fixé de manière ajustable en hauteur au corps de paroi. Une telle disposition permet d'ajuster l'écart entre le bord inférieur de l'élément longiforme et la trajectoire des dents de grattage 121a de la partie active du moyen de grattage 12, sans avoir à déplacer l'ensemble de la paroi 112 en hauteur. En outre, cet élément longiforme 112a constitue un renfort qui s'oppose au fléchissement de la paroi avant 112 sous l'effet de la poussée du bloc compact. En vue de cet ajustement en hauteur, opéré de manière manuelle ou à l'aide de vérins, le corps de paroi avant 112 présente des lumières verticales dans lesquelles sont engagés des boulons de fixation de l'élément longiforme 112a, avantageusement constitué par un profilé en U.

Pour éviter tout tassement des matières dans le dièdre aigu formé par la paroi 112 et la paroi latérale correspondante, est placé en avant de ce dièdre ([Fig.22], [Fig.23]), un déflecteur 11a formé par une paroi verticale substantiellement rectangulaire disposée de manière oblique par rapport au sens d'avancement de la partie active du moyen de grattage 12. Comme représenté, cette paroi verticale prend appui par sa bordure arrière contre la paroi latérale 111 correspondante. Par ailleurs, chaque paroi latérale 111 comporte en partie inférieure au-dessus du fond 110, une pente 111a formant avec la pente 111a de l'autre paroi latérale 111 un moyen de centrage du bloc de matière végétale vers la partie active du moyen de grattage 12 ([Fig.24]).

Préférentiellement, en avant de paroi avant 112 au-dessus du moyen de grattage 12, est prévu un peigne 112b formé par une paroi rectangulaire fixée à la structure du poste de désagrégation de manière réglable en hauteur afin d'ajuster l'écart entre le moyen de grattage 12 et le bord inférieur horizontal du peigne 112b. Le bord inférieur de cette paroi est dentelé pour former une carde dont l'effet est notamment d'orienter les brins de matière végétale transportés par le tapis et dans une certaine mesure, de cisailler les brins de matière végétale. Comme on le comprend, la paroi avant 112 et la structure de peigne 112b constituent des obstacles à la progression des amas de matière végétale et dans une certaine mesure assurent une fonction de régulation du débit de matière végétale délivré par le poste de désagrégation.

Judicieusement, l'écart entre la paroi avant 112 et le moyen de grattage 12 est plus important que l'écart entre ledit moyen de grattage et le peigne 112b. On obtient ainsi un effet étagé de régulation. De plus, l'intervalle entre la paroi avant 112 et le peigne 112b délimite une chambre de malaxage dans laquelle les amas de matière végétale sont brassés et disloqués au moins en partie, sous l'effet combiné du mouvement de la partie active du moyen de grattage 12 et de l'obstacle que constitue la paroi 112b.

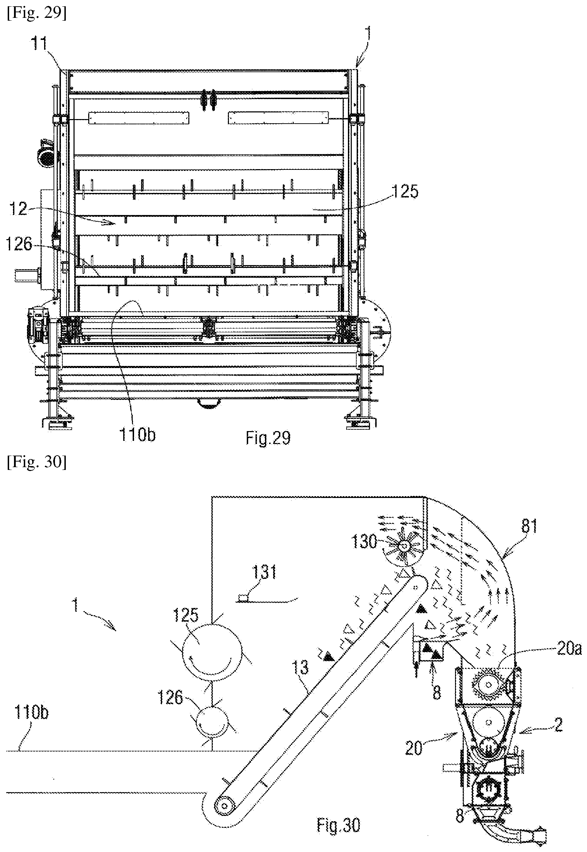

En figures [Fig.27] à [Fig.30], est représentée une forme préférée de réalisation de la source 1 de matière végétale. Cette source 1 est toujours constituée par au moins un poste de désagrégation d'un bloc compact par grattage, apte à délivrer par une zone de délivrance 10 une matière végétale totalement ou partiellement démêlée et décompactée. Comme représenté, le poste de désagrégation comporte sur un châssis, une enceinte 11 prévue pour recevoir le bloc compact, un moyen de grattage 12 et un moyen de transfert 13 vers l'unité 2 de la matière végétale défibrée ou fragmentée dont la zone aval forme la zone de délivrance 10. L'enceinte 11 comprend deux parois latérales 111 et une paroi arrière 113, formées par des battants de porte.

Le fond de l'enceinte 11 sur lequel repose le bloc compact est formé par un tapis horizontal sans fin 110b à lattes, motorisé, prévu pour appliquer ledit bloc contre le moyen de grattage 12, ce dernier formant la partie avant de l'enceinte 11. Ce moyen de grattage est de préférence formé par deux rouleaux déchiqueteurs supérieur 125 et inférieur 126, motorisés, horizontaux, parallèles, montés l'un au-dessus de l'autre, en rotation dans des paliers solidaires du châssis du poste de désagrégation. Comme on peut le voir en [Fig.29] et [Fig.30], le rouleau déchiqueteur supérieur 125 est de plus grand diamètre que le rouleau déchiqueteur inférieur 126, ce qui permet une attaque progressive du bloc compact. Les rouleaux déchiqueteurs 125, 126 tournent préférentiellement dans le même sens et sont écartés l'un de l'autre. Ils déversent la matière végétale arrachée sur le moyen de transfert 13.

Préférentiellement, chaque rouleau déchiqueteur supérieur 125 et inférieur 126 est formé d'un tambour cylindrique auquel sont fixés des doigts radiaux de démêlage organisés selon deux hélices opposées pour ramener la matière végétale arrachée du bloc compact vers leur zone centrale et la répartir sur la largeur du moyen de transfert 13. De plus, chaque rouleau déchiqueteur comporte des éléments de coupe radiaux triangulaires connus sous le terme de « section », disposés en alternance avec les doigts radiaux de démêlage. Ces éléments de coupe ont essentiellement pour rôle de trancher les éléments fibreux de longueur importante afin que ceux-ci ne s'enroulent pas autour des rouleaux déchiqueteurs et ne les engorgent pas. Le sens de rotation desdits rouleaux est tel que la paille arrachée du bloc compact est entraînée vers le haut par les doigts de démêlage avant d'être déversée sur le moyen de transfert 13.

Le moyen de transfert 13 est préférentiellement constitué par un convoyeur ascendant doté d'un tapis sans fin à lattes, dont la zone aval, c'est-à-dire la zone supérieure, forme la zone de délivrance 10 et pénètre dans l'ouverture 813 d'introduction que présente la hotte 81. Les caractéristiques du tapis sans fin seront adaptées à la nature de la matière végétale plus ou moins fibreuse à transférer vers l'unité 2. En partie supérieure, le moyen de transfert 13 comporte un dispositif de régulation 130 destiné à s'opposer à l'introduction dans la hotte 81 des amas de matière végétale d'épaisseur trop importante et à les repousser vers le bas. Préférentiellement, le dispositif de régulation 130 est formé d'un arbre rotatif motorisé horizontal, auquel sont fixés des doigts radiaux aptes à repousser vers le bas, du fait de la rotation, les amas de matière végétale. L'arbre rotatif s'étend de manière transversale au tapis du convoyeur ascendant constitutif du moyen de transfert 13, à écartement de ce dernier.

Avantageusement, le poste de désagrégation comporte un capteur de niveau 131 prévu pour être actionné par une épaisseur trop importante de matière végétale transportée par le moyen de transfert 13, l'actionnement de ce capteur déclenchant l'arrêt du moyen de grattage 12 ainsi que l'arrêt du tapis 110b, le moyen de transfert 13 étant toujours actionné. L'arrêt de l'actionnement du capteur de niveau 131 engendre la remise en marche du moyen de grattage 12 et du tapis 110b. Ce capteur de niveau est par exemple un contacteur électrique associé à une palette d'actionnement.

Il va de soi que la présente invention peut recevoir tous aménagements et variantes du domaine des équivalents techniques sans pour autant sortir du cadre du présent brevet tel que défini par les revendications ci-après.

## Revendications

1. Unité (2) de transfert et de distribution de matière végétale, comportant:
- une zone amont (20) de chargement de matière végétale, prévue pour être alimentée par une source (1) de matière végétale, ladite zone amont (20) comportant une ouverture de chargement (20a) et, à l'opposé de cette ouverture, un fond (200) en forme de goulotte,
- une zone aval (21) de délivrance de matière végétale prévue pour être en relation de communication avec un moyen de transport (3) de cette matière végétale vers un lieu de distribution,
- un convoyeur (22) mobile, traversant de part en part lesdites zones amont et aval (20, 21), comportant des cellules (22a) aptes à transporter la matière végétale entre ladite zone amont (20) et ladite zone aval (21), et
- un générateur (4) d'écoulement gazeux, en relation de communication par une conduite (40) de transport de fluide gazeux avec la zone aval (21), apte à former dans ladite zone aval un courant gazeux porteur sous pression apte à chasser de cette zone aval la matière végétale qui s'y trouve et qui y est délivrée par le convoyeur (22), et à l'introduire dans le moyen de transport (3),
**caractérisée en ce qu'**elle comporte un moyen d'aspiration en relation de communication avec au moins la zone amont (20) et avec les cellules (22a) du convoyeur (22) présentes dans ladite zone amont, ledit moyen d'aspiration étant apte à créer une dépression dans lesdites cellules pour faciliter leur complet remplissage et pour aspirer les poussières que pourrait transporter la matière végétale.

2. Unité (2) de transfert et de distribution selon la revendication précédente, **caractérisée en ce que** le moyen d'aspiration comprend une chambre d'aspiration (204) en relation de communication avec la zone amont (20) et un ensemble (5) d'aspiration et de refoulement d'air intégrant un collecteur (5b) de poussières, ledit ensemble comportant une bouche d'aspiration (50) connectée à ladite chambre d'aspiration et une bouche de refoulement (51) d'air épuré formée par la bouche de refoulement d'air dudit collecteur de poussières.

3. Unité (2) de transfert et de distribution selon la revendication précédente, **caractérisée en ce que** l'une des parois latérales ou le fond (200) de la zone amont (20) de chargement est perforée et constitue l'une des parois de la chambre d'aspiration (204).

4. Unité (2) de transfert et de distribution selon l'une quelconque des revendications 2 à 4, **caractérisée en ce que** le générateur (4) d'écoulement gazeux est formé par l'ensemble (5) d'aspiration et de refoulement, la bouche de refoulement (51) d'air épuré dudit ensemble étant en relation de communication avec la zone aval (21) de délivrance.

5. Unité (2) de transfert et de distribution selon l'une quelconque des revendications précédentes, **caractérisée en ce que** le convoyeur (22) est formé :
- d'une chaîne sans fin (220) tendue entre une roue menée (221) et une roue menante (222) accouplée à un organe moteur, et
- de palettes (223) équidistantes, solidarisées à ladite chaîne sans fin, se développant de manière perpendiculaire à cette dernière, chaque cellule (22a) étant définie par l'intervalle entre deux palettes (223) consécutives, et chaque palette comportant une face frontale et une face dorsale réunies par une face périphérique épousant la forme de goulotte du fond (200) de la zone amont (20) de chargement.

6. Unité (2) de transfert et de distribution selon l'une quelconque des revendications précédentes, **caractérisée en ce que** :
- le convoyeur (22) est mobile dans des conduits rigides formés par un premier conduit recevant la zone amont (20) de chargement, par un second conduit opposé au précédent, recevant la zone aval (21) de délivrance, et par des boitiers d'extrémité amont (224) et aval (225) dans lesquels sont installées les roues menée (221) et menante (222),
- ledit premier conduit est formé de deux premiers segments de conduit, l'un amont (226), l'autre aval (227), le premier segment amont (226) étant raccordé d'une part au boîtier amont (224) et d'autre part à la zone amont (20), et le premier segment aval (227) étant raccordé à ladite zone amont et au boîtier aval (225),
- ledit second conduit rigide est formé de deux seconds segments de conduit, l'un amont (228), l'autre aval (229), le second segment amont (228) étant raccordé d'une part au boîtier aval (225) et d'autre part à la zone aval (21), tandis que le second segment aval (229) est raccordé à ladite zone aval et au boîtier amont (224),
- le premier segment aval (227) pénètre par une partie amont, dans ladite zone amont (20) et présente dans cette zone une extrémité biseautée (227a).

7. Unité (2) de transfert et de distribution selon l'une quelconque des revendications précédentes, **caractérisée en ce qu'**elle comporte un module (7) de démêlage de matière végétale et de dislocation des amas, disposé au droit de la zone amont (20) de chargement, ledit module comportant un rotor (72) démêleur et/ou broyeur, motorisé, formé d'un arbre (720) sur lequel sont enfilés des éléments radiaux (721) de démêlage et/ou de broyage, disposés côte à côte, chaque élément radial (721) présentant un noyau central doté d'un alésage traversant par lequel il est enfilé sur l'arbre (720) et au moins une forme triangulaire de démêlage ou de broyage formant une saillie radiale par rapport au noyau central et présentant une extrémité libre en pointe, les éléments radiaux (721) étant associés à des contre-couteaux (73) et étant décalés angulairement les uns par rapport aux autres, et les extrémités en pointe des formes triangulaires de ces éléments radiaux définissant au moins deux hélices consécutives, à pas opposés, de nature à rassembler la matière végétale démêlée ou broyée en zone centrale du module (7) de démêlage.

8. Unité (2) de transfert et de distribution selon l'une quelconque des revendications précédentes, **caractérisée en ce que** la zone aval (21) de délivrance comporte une buse rotative (212) et que le courant gazeux délivré par le générateur (4) est introduit dans ladite zone aval (21) par l'intermédiaire de ladite buse rotative, cette dernière étant apte à augmenter la vitesse du courant gazeux.

9. Unité (2) de transfert et de distribution selon l'une quelconque des revendications précédentes, **caractérisée en ce que** la zone aval (21) de délivrance comporte un extracteur mécanique (210) de matière végétale, apte à balayer ladite zone aval (21) et les cellules (22a) qui s'y trouvent pour parfaire l'extraction de la matière végétale non chassée par le courant gazeux sous pression.

10. Unité (2) de transfert et de distribution selon l'une quelconque des revendications précédentes, **caractérisée en ce que** la zone aval (21) de délivrance est équipée d'un broyeur (213) apte à disloquer les amas de matière végétale, ledit broyeur comportant un arbre rotatif motorisé sur lequel est montée une série de contre-couteaux (213b) associée à une série de couteaux fixes (213c).

11. Unité (2) de transfert et de distribution selon l'une quelconque des revendications précédentes, caractérisée en ce et qu'elle est dotée d'au moins une vanne (30, 41, 45) pilotée installée sur la conduite (40) de transport de fluide gazeux et sur le moyen de transport (3), que le moyen de transport (3) est formé par une conduite, et que ladite vanne, à la commande, est apte à isoler du générateur (4) et du moyen de transport (3) la zone aval (21) de délivrance et à établir une communication directe entre la conduite (40) et le moyen de transport (3), le générateur (4) fonctionnant alors en aspiration pour créer une dépression dans la conduite (40) et dans le moyen de transport (3), afin de disloquer les bouchons de matière végétale présents dans ledit moyen de transport (3).

12. Unité (2) de transfert et de distribution selon l'une quelconque des revendications précédentes, **caractérisée en ce qu'**elle est pourvue en amont de sa zone amont (20) de chargement, d'un séparateur (8) apte à générer au moins une lame d'air sous pression de direction ascendante, transversale au flux de matière végétale délivré par la source (1), à soutenir au-dessus d'un réceptacle (85) de récupération le flux de matière végétale et à permettre, avant introduction dans ladite zone amont (20), la chute des corps pesants vers le réceptacle (85).

13. Unité (2) de transfert et de distribution selon la revendication précédente, **caractérisée en ce que** :
- le séparateur (8) comprend un corps allongé (80) horizontal, dans lequel est formée une chambre de distribution (800) alimentée en air sous pression par un ou plusieurs tuyaux d'alimentation (803),
- à ladite chambre de distribution (800) sont raccordées plusieurs buses (801) d'éjection d'air s'étendant horizontalement, disposées selon au moins une rangée unique, aptes chacune à délivrer une lame d'air sous pression,
- sous la rangée de buses (801), le corps allongé (80) forme le réceptacle (85),
- le séparateur (8) comprend une paroi déflectrice (802) formant protection au-dessus de la rangée de buses (801), apte à conduire les corps pesants vers le réceptacle (85) et à éviter que ces derniers ne viennent heurter les buses (801).

14. Installation de fourniture de matière végétale **caractérisée en ce qu'**elle comporte une unité (2) de transfert et de distribution selon l'une quelconque des revendications précédentes et une source (1) de matière végétale en relation de communication avec l'ouverture de chargement (20a) de la zone amont (20) de ladite unité (2), ladite source comprenant un poste de désagrégation d'un bloc compact de matière végétale.

15. Installation selon la revendication précédente, **caractérisée en ce que** la source (1) de matière végétale est constituée par ledit au moins un poste de désagrégation d'un bloc compact de matière végétale par action de grattage, apte à délivrer par une zone de délivrance (10) une matière végétale totalement ou partiellement démêlée et décompactée, ledit poste de désagrégation comportant :
- une enceinte (11) prévue pour recevoir un bloc de matière végétale, et
- un moyen de grattage (12) évoluant sur une sole de glissement (110a) horizontale formant, en combinaison avec ledit moyen de grattage (12), le fond de l'enceinte (11) sur lequel le bloc de matière végétale est destiné à reposer,
- ladite enceinte comportant une paroi avant (112) contre laquelle vient buter le bloc de matière végétale sous l'effet de l'action du moyen de grattage (12) ;
- le moyen de grattage (12) étant doté d'éléments de grattage (121) mobiles entraînés vers la zone de délivrance (10) par au moins un premier organe moteur (123), et prévus pour être au contact, sur au moins une portion de leur trajet, avec le bloc de matière végétale, pour arracher à ce dernier de la matière végétale et la transporter vers la zone de délivrance, laquelle est en relation de communication avec l'ouverture de chargement (20a) que comporte la zone amont (20) de chargement de l'unité (2) de transfert et de distribution.

## Patentansprüche

1. Einheit (2) zum Transportieren und Verteilen von Pflanzenmaterial, welche umfasst:
- einen stromaufwärtige Zone (20) zum Laden von Pflanzenmaterial, die dafür ausgelegt ist, von einer Quelle (1) für Pflanzenmaterial beschickt zu werden, worin die stromaufwärtige Zone (20) eine Ladeöffnung (20a) und gegenüber dieser Öffnung einen rutschenförmigen Boden (200) umfasst,
- eine stromabwärtige Zone (21) zum Abgeben von Pflanzenmaterial, die dazu ausgelegt ist, mit einer Einrichtung (3) zum Transportieren dieses Pflanzenmaterials zu einem Verteilungsort in Verbindung zu stehen,
- einen beweglichen Förderer (22), der durch die stromaufwärtige und stromabwärtige Zonen (20, 21) verläuft und Zellen (22a) umfasst, die das Pflanzenmaterial zwischen der stromaufwärtigen Zone (20) und der stromabwärtigen Zone (21) transportieren können, und
- einen Gasströmungsgenerator (4), der über eine Gastransportleitung (40) mit der stromabwärtigen Zone (21) verbunden ist und in der stromabwärtigen Zone eine unter Druck stehende Gasströmung erzeugen kann, die das in dieser Zone befindliche und von dem Förderer (22) dorthin beförderte Pflanzenmaterial aus dieser Zone ausstoßen und in die Transportvorrichtung (3) einleiten kann,
**dadurch gekennzeichnet, dass** sie eine Saugvorrichtung umfasst, die mit mindestens der stromaufwärtigen Zone (20) und mit den in dieser stromaufwärtigen Zone vorhandenen Zellen (22a) des Förderers (22) in Verbindung steht, worin die Saugvorrichtung in der Lage ist, in den Zellen einen Unterdruck zu erzeugen, um deren vollständige Befüllung zu erleichtern und jeglichen Staub abzusaugen, der vom Pflanzenmaterial mitgeführt werden kann.

2. Transfer- und Verteilungseinheit (2) nach dem vorherigen Anspruch, **dadurch gekennzeichnet, dass** die Saugvorrichtung eine Saugkammer (204) umfasst, die mit der stromaufwärtigen Zone (20) in Verbindung steht, und eine Luftansaug- und -auslassbaugruppe (5) umfasst, die einen Staubabscheider (5b) umfasst, worin die Baugruppe einen mit der Saugkammer verbundenen Saugeinlass (50) und einen durch den Luftauslass des Staubabscheiders gebildeten Reinluftauslass (51) umfasst.

3. Transfer- und Verteilungseinheit (2) nach dem vorherigen Anspruch, **dadurch gekennzeichnet, dass** eine der Seitenwände oder der Boden (200) der stromaufwärtigen Zone (20) perforiert ist und eine der Wände der Saugkammer (204) bildet.

4. Transfer- und Verteilungseinheit (2) nach einem der Ansprüche 2 bis 4, **dadurch gekennzeichnet, dass** der Gasströmungsgenerator (4) durch die Saug- und Auslassbaugruppe (5) gebildet wird, worin der Auslass (51) für gereinigte Luft aus dieser Baugruppe mit der stromabwärtigen Abgabezone (21) in Verbindung steht.

5. Transfer- und Verteilungseinheit (2) nach einem der vorstehenden Ansprüche, **dadurch gekennzeichnet, dass** der Förderer (22) umfasst:
- eine Endloskette (220), die zwischen einem Antriebsrad (221) und einem mit einem Motor gekoppelten Antriebsrad (222) gespannt ist, und
- in gleichem Abstand voneinander angeordnete Mitnehmer (223), die an der Endloskette befestigt sind und sich senkrecht zu dieser erstrecken, worin jede Zelle (22a) durch den Abstand zwischen zwei aufeinanderfolgenden Mitnehmern (223) definiert ist und jeder Mitnehmer eine Vorderfläche und eine Rückfläche aufweist, die durch eine Umfangsfläche verbunden sind, die der Form der Rutsche des Bodens (200) der stromaufwärtigen Zone (20) entspricht.

6. Transfer- und Verteilungseinheit (2) nach einem der vorstehenden Ansprüche, **dadurch gekennzeichnet, dass**:
- der Förderer (22) in starren Kanälen beweglich ist, die durch einen ersten Kanal, der die stromaufwärtige Ladezone (20) aufnimmt, durch einen zweiten Kanal, der dem ersten gegenüberliegt und die stromabwärtige Abgabezone (21) aufnimmt, und durch stromaufwärtige (224) und stromabwärtige (225) Endkästen gebildet werden, in denen die angetriebenen (221) und antreibenden (222) Räder installiert sind,
- der erste Kanal aus zwei ersten Kanalsegmenten gebildet ist, einem stromaufwärtigen (226) und einem stromabwärtigen (227), worin das erste stromaufwärtige Segment (226) einerseits mit dem stromaufwärtigen Gehäuse (224) und andererseits mit der stromaufwärtigen Zone (20) verbunden ist und das erste stromabwärtige Segment (227) mit der stromaufwärtigen Zone und dem stromabwärtigen Gehäuse (225) verbunden ist,
- die zweite starre Leitung besteht aus zwei zweiten Leitungssegmenten, einem stromaufwärtigen (228) und einem stromabwärtigen (229), worin das zweite stromaufwärtige Segment (228) einerseits mit dem stromabwärtigen Gehäuse (225) und andererseits mit der stromabwärtigen Zone (21) verbunden ist, während das zweite stromabwärtige Segment (229) mit der stromabwärtigen Zone und dem stromaufwärtigen Gehäuse (224) verbunden ist,
- das erste stromabwärtige Segment (227) durchdringt einen stromaufwärtigen Teil in die stromaufwärtige gelegene Zone (20) und weist in dieser Zone ein abgeschrägtes Ende (227a) auf.

7. Transfer- und Verteilungseinheit (2) nach einem der vorstehenden Ansprüche, **dadurch gekennzeichnet, dass** diese ein Modul (7) zum Entwirren von Pflanzenmaterial und zum Aufbrechen von Klumpen umfasst, das gegenüber der stromaufwärtigen Ladezone (20) angeordnet ist, worin das Modul einen motorisierten Entwirrungs- und/oder Mahlrotor (72) umfasst, das aus einer Welle (720) gebildet ist, auf die radiale Entwirrungs- und/oder Zerkleinerungselemente (721) aufgewunden sind, die nebeneinander angeordnet sind, worin jedes radiale Element (721) einen zentralen Kern mit einer Durchgangsbohrung aufweist, durch die es auf die Welle (720) aufgewunden ist, und mindestens eine dreieckige Entwirrungs- oder Zerkleinerungsform, die einen radialen Vorsprung vom zentralen Kern bildet und ein spitzes freies Ende aufweist, worin die radialen Elemente (721) mit Gegenklingen (73) verbunden und winklig zueinander versetzt sind und die spitzen Enden der dreieckigen Formen dieser radialen Elemente mindestens zwei aufeinanderfolgende Schnecken mit entgegengesetzten Steigungen bilden, um das entwirrte oder zerkleinerte Pflanzenmaterial im zentralen Bereich des Entwirrungsmoduls (7) zu sammeln.

8. Transfer- und Verteilungseinheit (2) nach einem der vorstehenden Ansprüche, **dadurch gekennzeichnet, dass** die stromabwärtige Abgabezone (21) eine Drehdüse (212) umfasst und die vom Generator (4) gelieferte Gasströmung über die Drehdüse in die stromabwärtige Zone (21) eingeleitet wird, worin die Drehdüse die Geschwindigkeit des Gasstroms erhöhen kann.

9. Transfer- und Verteilungseinheit (2) nach einem der vorstehenden Ansprüche, **dadurch gekennzeichnet, dass** die stromabwärtige Abgabezone (21) einen mechanischen Extraktor (210) für Pflanzenmaterial umfasst, der die stromabwärtige Zone (21) und die darin befindlichen Zellen (22a) ausfegen kann, um die Extraktion von Pflanzenmaterial zu vervollständigen, das nicht durch den unter Druck stehenden Gasstrom ausgetrieben wurde.

10. Transfer- und Verteilungseinheit (2) nach einem der vorstehenden Ansprüche, **dadurch gekennzeichnet, dass** die stromabwärtige Abgabezone (21) mit einem Mahlwerk (213) ausgestattet ist, die in der Lage ist, Klumpen von Pflanzenmaterial aufzubrechen, worin das Mahlwerk eine motorisierte Drehwelle umfasst, auf der eine Reihe von Gegenklingen (213b) angebracht ist, die mit einer Reihe von feststehenden Messern (213c) verbunden sind.

11. Transfer- und Verteilungseinheit (2) nach einem der vorstehenden Ansprüche, **dadurch gekennzeichnet, dass** diese mit mindestens einem Steuerventil (30, 41, 45) ausgestattet ist, das an der Transportleitung (40) für gasförmige Fluide und an dem Transportmittel (3) installiert ist, dass das Transportmittel (3) durch eine Leitung gebildet wird, und dass das Ventil, wenn es aktiviert wird, den Generator (4) und das Transportmittel (3) voneinander trennen und eine direkte Verbindung zwischen der Leitung (40) und dem Transportmittel (3) herstellen kann, wobei der Generator (4) dann im Saugmodus arbeitet, um einen Unterdruck in der Leitung (40) und im Transportmittel (3) zu erzeugen, um die in dem Transportmittel vorhandenen Verstopfungen durch Pflanzenmaterial zu beseitigen (3) aufzulösen.

12. Transfer- und Verteilungseinheit (2) nach einem der vorstehenden Ansprüche, **dadurch gekennzeichnet, dass** diese stromaufwärts ihrer stromaufwärtigen Ladezone (20) mit einem Separator (8) versehen ist, der in der Lage ist, mindestens einen nach oben gerichteten Druckluftstrahl quer zum Fluss des von der Quelle (1) gelieferten Pflanzenmaterials zu erzeugen, um den Fluss des Pflanzenmaterials über einem Auffangbehälter (85) zu stützen und um vor der Einführung in die stromaufwärtige Zone (20) die schweren Körper in Richtung des Behälters (85) fallen zu lassen.

13. Transfer- und Verteilungseinheit (2) nach dem vorstehenden Anspruch, **dadurch gekennzeichnet, dass**:
- der Separator (8) einen länglichen horizontalen Körper (80) umfasst, in dem eine Verteilerkammer (800) ausgebildet ist, die über eine oder mehrere Versorgungsleitungen (803) mit Druckluft versorgt wird.
- mehrere horizontal verlaufende Luftausstoßdüsen (801) mit der Verteilungskammer (800) verbunden, in mindestens einer Reihe angeordnet und jeweils in der Lage sind, einen Druckluftstrahl abzugeben,
- unterhalb der Düsenreihe (801) der längliche Körper (80) den Auffangbehälter (85) bildet, und dadurch, dass
- der Abscheider (8) eine Ablenkwand (802) umfasst, die einen Schutz über der Düsenreihe (801) bildet und in der Lage ist, die schweren Körper in Richtung des Behälters (85) zu lenken und zu verhindern, dass diese auf die Düsen (801) treffen.

14. Anlage zur Zuführung von Pflanzenmaterial, **dadurch gekennzeichnet, dass** diese eine Übertragungs- und Verteilungseinheit (2) nach einem der vorstehenden Ansprüche und eine Pflanzenmaterialquelle (1) umfasst, die mit der Ladeöffnung (20a) der stromaufwärtigen Zone (20) der Einheit (2) in Verbindung steht, worin die Quelle eine Station zum Aufbrechen eines kompakten Blocks aus Pflanzenmaterial umfasst.

15. Anlage nach dem vorherigen Anspruch, **dadurch gekennzeichnet, dass** die Quelle (1) für Pflanzenmaterial aus mindestens einer Station zum Aufbrechen eines kompakten Blocks aus Pflanzenmaterial durch Schaben besteht, die in der Lage ist, über eine Abgabezone (10) vollständig oder teilweise entwirrtes und dekomprimiertes Pflanzenmaterial zu liefern, worin die Aufbrechstation umfasst:
- eine Umschließung (11), die zur Aufnahme eines Blocks aus Pflanzenmaterial ausgelegt ist, und
- eine Schabvorrichtung (12), die sich auf einer horizontalen Gleitbasis (110a) bewegt, die in Kombination mit der Schabvorrichtung (12) den Boden der Umschließung (11) bildet, auf dem der Block aus Pflanzenmaterial aufliegen soll,
- worin die Umschließung eine Vorderwand (112) umfasst, an der der Block aus Pflanzenmaterial unter der Wirkung der Schabvorrichtung (12) zu Liegen kommt;
- worin die Schabvorrichtung (12) mit beweglichen Schabelementen (121) ausgestattet ist, die von mindestens einem ersten Motor (123) in Richtung der Abgabezone (10) angetrieben werden und so ausgelegt sind, über mindestens einen Teil ihres Weges mit dem Pflanzenmaterialblock in Kontakt zu stehen, um Pflanzenmaterial von diesem zu entfernen und es zur Abgabezone zu transportieren, die mit der Ladeöffnung (20a) verbunden ist, die die stromaufwärtige Ladezone (20) der Transfer- und Verteilungseinheit (2) umfasst.

## Claims

1. A unit (2) for transferring and distributing plant material, comprising:
- an upstream zone (20) for loading plant material, designed to be fed by a source (1) of plant material, said upstream zone (20) comprising a loading opening (20a) and, opposite this opening, a chute-shaped bottom (200),
- a downstream zone (21) for delivering plant material, designed to be in communication with a means (3) for transporting this plant material to a distribution location,
- a mobile conveyor (22) passing through said upstream and downstream zones (20, 21), comprising cells (22a) capable of transporting the plant material between said upstream zone (20) and
said downstream zone (21), and
- a gas flow generator (4), connected by a gas transport pipe (40) to the downstream zone (21), capable of forming in said downstream zone a pressurised gas flow capable of expelling from this downstream zone the plant material located therein and delivered thereto by the conveyor (22), and to introduce it into the transport means (3), **characterised in that** it comprises a suction means in communication with at least the upstream zone (20) and with the cells (22a) of the conveyor (22) present in said upstream zone, said suction means being capable of creating a vacuum in said cells to facilitate their complete filling and to suck up any dust that may be carried by the plant material.

2. Transfer and distribution unit (2) according to the previous claim, **characterised in that** the suction means comprises a suction chamber (204) in communication with the upstream zone (20) and an air suction and discharge assembly (5) incorporating a dust collector (5b), said assembly comprising a suction inlet (50) connected to said suction chamber and a purified air outlet (51) formed by the air outlet of said dust collector.

3. Transfer and distribution unit (2) according to the previous claim, **characterised in that** one of the side walls or the bottom (200) of the upstream loading zone (20) is perforated and forms one of the walls of the suction chamber (204).

4. Transfer and distribution unit (2) according to any of claims 2 to 4, **characterised in that** the gas flow generator (4) is formed by the suction and discharge assembly (5), the discharge outlet (51) for purified air from said assembly being in communication with the downstream delivery zone (21).

5. Transfer and distribution unit (2) according to any of the preceding claims, **characterised in that** the conveyor (22) comprises:
- an endless chain (220) stretched between a driven wheel (221) and a drive wheel (222) coupled to a motor, and
- equidistant paddles (223), secured to said endless chain, extending perpendicularly to the latter, each cell (22a) being defined by the interval between two consecutive paddles (223), and each paddle comprising a front face and a rear face joined by a peripheral face matching the shape of the chute of the bottom (200) of the upstream loading zone (20).

6. Transfer and distribution unit (2) according to any of the preceding claims, **characterised in that**:
- the conveyor (22) is movable in rigid ducts formed by a first duct receiving the upstream loading zone (20), by a second duct opposite the first, receiving the downstream delivery zone (21), and by upstream (224) and downstream (225) end boxes in which the driven (221) and driving (222) wheels are installed,
- said first conduit is formed of two first conduit segments, one upstream (226) and the other downstream (227), the first upstream segment (226) being connected on the one hand to the upstream housing (224) and on the other hand to the upstream zone (20), and the first downstream segment (227) being connected to said upstream zone and to the downstream housing (225),
- said second rigid conduit is formed of two second conduit segments, one upstream (228) the other downstream (229), the second upstream segment (228) being connected on the one hand to the downstream housing (225) and on the other hand to the downstream zone (21), while the second downstream segment (229) is connected to said downstream zone and to the upstream housing (224),
- the first downstream segment (227) penetrates through an upstream part into said upstream zone (20) and has a bevelled end (227a) in this zone.

7. Transfer and distribution unit (2) according to any of the preceding claims, **characterised in that** it comprises a module (7) for untangling plant material and breaking up clumps, arranged opposite the upstream loading zone (20), said module comprising a motorised untangling and/or grinding rotor (72), formed by a shaft (720) onto which radial untangling and/or shredding elements (721) are threaded, arranged side by side, each radial element (721) having a central core with a through bore through which it is threaded onto the shaft (720) and at least one triangular detangling or shredding shape forming a radial projection from the central core and having a pointed free end, the radial elements (721) being associated with counter-blades (73) and being angularly offset from one another, and the pointed ends of the triangular shapes of these radial elements defining at least two consecutive helices, with opposite pitches, such as to gather the untangled or crushed plant material in the central area of the untangling module (7).

8. Transfer and distribution unit (2) according to any of the preceding claims, **characterised in that** the downstream delivery zone (21) comprises a rotary nozzle (212) and the gas flow delivered by the generator (4) is introduced into said downstream zone (21) via said rotary nozzle, the latter being capable of increasing the velocity of the gas stream.

9. Transfer and distribution unit (2) according to any of the preceding claims, **characterised in that** the downstream delivery zone (21) comprises a mechanical extractor (210) for plant material, capable of sweeping said downstream zone (21) and the cells (22a) located therein to complete the extraction of plant material not driven out by the pressurised gas stream.

10. Transfer and distribution unit (2) according to any of the preceding claims, **characterised in that** the downstream delivery zone (21) is equipped with a grinder (213) capable of breaking up clumps of plant material, said grinder comprising a motorised rotating shaft on which is mounted a series of counter-blades (213b) associated with a series of fixed blades (213c).

11. Transfer and distribution unit (2) according to any of the preceding claims, **characterised in that** it is equipped with at least one (30, 41, 45) installed on the gaseous fluid transport line (40) and on the transport means (3), that the transport means (3) is formed by a line, and that said valve, when activated, is capable of isolating the generator (4) and the transport means (3) and to establish direct communication between the pipe (40) and the transport means (3), the generator (4) then operating in suction mode to create a vacuum in the pipe (40) and in the transport means (3) in order to break up the clogs of plant matter present in said transport means (3).

12. Transfer and distribution unit (2) according to any of the preceding claims, **characterised in that** it is provided upstream of its upstream loading zone (20) with a separator (8) capable of generating at least one upwardly directed blade of pressurised air, transverse to the flow of plant matter delivered by the source (1), to support the flow of plant matter above a collection receptacle (85) and to allow, before introduction into said upstream zone (20), the heavy bodies to fall towards the receptacle (85).

13. Transfer and distribution unit (2) according to the previous claim, **characterised in that**:
- the separator (8) comprises an elongated horizontal body (80), in which a distribution chamber (800) is formed, supplied with pressurised air by one or more supply pipes (803),
- several horizontally extending air ejection nozzles (801) are connected to said distribution chamber (800), arranged in at least a single row, each capable of delivering a jet of pressurised air,
- below the row of nozzles (801), the elongated body (80) forms the receptacle (85),
- the separator (8) comprises a deflector wall (802) forming a protection above the row of nozzles (801), capable of directing the heavy bodies towards the receptacle (85) and preventing them from striking the nozzles (801).

14. Plant material supply installation **characterised in that** it comprises a transfer and distribution unit (2) according to any of the preceding claims and a plant material source (1) in communication with the loading opening (20a) of the upstream zone (20) of said unit (2), said source comprising a station for breaking up a compact block of plant material.

15. Installation according to the previous claim, **characterised in that** the source (1) of plant material consists of at least one station for breaking up a compact block of plant material by scraping, capable of delivering, via a **delivery** zone (10), plant material that is totally or partially untangled and decompressed, said breaking-up station comprising:
- an enclosure (11) designed to receive a block of plant material, and
- a scraping means (12) moving on a horizontal sliding base (110a) which, in combination with said scraping means (12), forms the bottom of the enclosure (11) on which the block of plant material is intended to rest,
- said enclosure comprising a front wall (112) against which the block of plant material comes to rest under the effect of the action of the scraping means (12);
- the scraping means (12) being equipped with movable scraping elements (121) driven towards the delivery zone (10) by at least one first motor (123), and designed to be in contact, over at least part of their path, with the block of plant material, in order to remove plant material from the latter and transport it to the delivery zone, which is connected to the loading opening (20a) comprising the upstream loading zone (20) of the transfer and distribution unit (2).
